(19) Europäisches Patentamt
European Patent Office
Office européen des brevets

(11) **EP 3 640 275 B1**

(12) **EUROPEAN PATENT SPECIFICATION**

(45) Date of publication and mention of the grant of the patent:
**29.06.2022 Bulletin 2022/26**

(21) Application number: **19202938.7**

(22) Date of filing: **14.10.2019**

(51) International Patent Classification (IPC):
*C08G 59/18* (2006.01) *C08G 59/24* (2006.01)
*C08G 59/26* (2006.01) *C08G 59/38* (2006.01)
*C08G 59/40* (2006.01) *C08G 59/42* (2006.01)
*C08G 59/50* (2006.01) *C09D 163/00* (2006.01)
*C09J 163/00* (2006.01) *C08L 63/00* (2006.01)

(52) Cooperative Patent Classification (CPC):
(C-Sets available)
**C08G 59/38; C08G 59/188; C08G 59/24; C08G 59/245; C08G 59/26; C08G 59/40; C08G 59/42; C08G 59/50; C08L 63/00; C09D 163/00; C09J 163/00** (Cont.)

# (54) CURABLE EPOXY COMPOSITIONS AND CURED PRODUCTS THEREOF

HÄRTBARE EPOXIDZUSAMMENSETZUNG UND GEHÄRTETE PRODUKTE DARAUS

COMPOSITIONS ÉPOXY DURCISSABLES ET PRODUITS DURCIS CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2018 EP 18200354**

(43) Date of publication of application:
**22.04.2020 Bulletin 2020/17**

(73) Proprietor: **SHPP Global Technologies B.V.**
**4612 PX Bergen op Zoom (NL)**

(72) Inventors:
- **PRAKASH, SISTA**
  **Mt. Vernon, IN 47620-6367 (US)**
- **WANG, YANWAN**
  **Mt. Vernon, IN 47620-6367 (US)**
- **BAJAJ, DEVENDRA**
  **Mt. Vernon, IN 47620-6367 (US)**

(74) Representative: **Balder IP Law, S.L.**
**Paseo de la Castellana 93**
**5ª planta**
**28046 Madrid (ES)**

(56) References cited:
**EP-A1- 0 203 828** **EP-A1- 0 325 058**
**EP-A1- 2 620 460** **EP-A1- 3 026 073**
**EP-A1- 3 064 520** **EP-B1- 0 203 828**
**EP-B1- 0 325 058** **WO-A1-2018/058116**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 63/00, C08L 51/04**

## Description

BACKGROUND

Epoxy thermosets are generally formed from a mixture of one or more multifunctional epoxide compounds, which react with a hardening agent. This reaction allows for the growth of linear molecular weight of the polymer. The polymer thus formed can be cast into a specific shape and permanently hardened (cured) at a certain temperature. In their cured form, epoxy resins offer desirable properties including good adhesion to other materials, excellent resistance to corrosion and chemicals, high tensile strength, and good electrical resistance.

Epoxy polymers have been described in for instance:

EP 3 064 520 A1 relates to curable resin compositions containing an epoxy resin as a main component having excellent storage stability and impact resistance.
EP 2 620 460 A1 describes a fiber-reinforced composite material having excellent heat resistance and strength properties which composition comprises an epoxy resin.
EP 0 203 828 A1 describes cured epoxy resin compositions having a high glass transition temperature, high ductility, and low moisture pick-up sed.

However, cured epoxy polymers can be brittle and lack toughness. Moreover, attempts to increase toughness often result in epoxy resins having high viscosities that hinder processibility. Accordingly, there remains a need for epoxy resins with improved processibility that can be cured to provide epoxy thermosets having increased fracture toughness.

SUMMARY

According to an aspect, a curable high heat epoxy composition comprises 40 to 95 weight percent (wt%), preferably 50 to 90 wt%, more preferably 55 to 80 wt% of at least one high heat diepoxy compound of formulas (I) to (X);

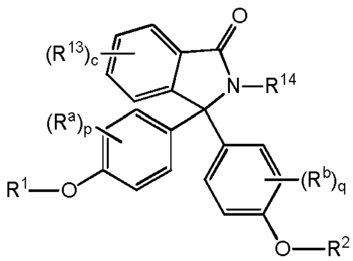
(I);
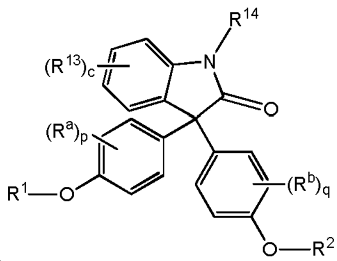
(II);
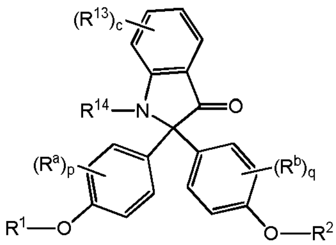
(III);

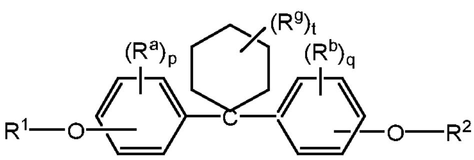
(IV);
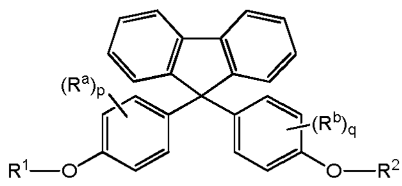
(V)

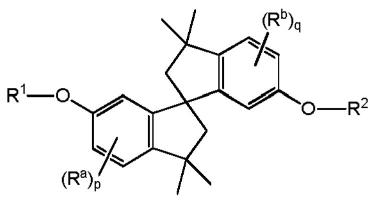
(VI);
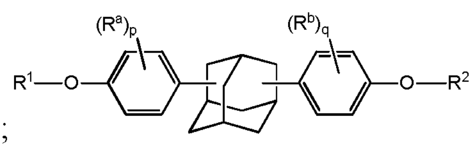
(VII);

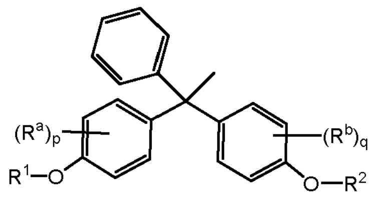 (VIII); 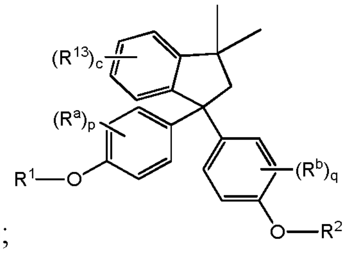 (IX);

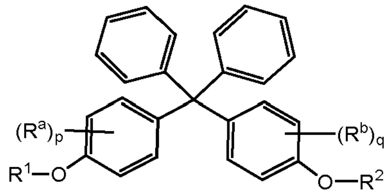

(X);1 to 40 wt%, preferably 5 to 30 wt%, more preferably 8 to 20 wt% of an auxiliary polyepoxide; 0.01 to 12 wt%, preferably 0.1 to 10 wt%, more preferably 1 to 8 wt% of a core-shell particle comprising an elastomer core and a rigid shell; and a hardener, wherein, in formulas (I) to (X), $R^1$ and $R^2$ are each independently an epoxide-containing functional group; $R^a$ and $R^b$ are each independently halogen, $C_1$-$_{12}$ alkyl, $C_2$-$_{12}$ alkenyl, $C_3$-$_8$ cycloalkyl, or $C_1$-$_{12}$ alkoxy; p and q are each independently 0 to 4; $R^{13}$ is independently a halogen or a $C_1$-$_6$ alkyl group; c is independently 0 to 4; $R^{14}$ is independently a $C_1$-$_6$ alkyl, phenyl, or phenyl substituted with up to five halogens or $C_1$-$_6$ alkyl groups; $R^g$ is independently $C_1$-$C_{12}$ alkyl or halogen, or two $R^g$ groups together with the carbon atoms to which they are attached form a four-, five, or six-membered cycloalkyl group; and t is 0 to 10.

According to another aspect, a cured epoxy composition comprises the product obtained by curing the curable high heat epoxy composition.

In yet another aspect, a method for the manufacture of a cured epoxy composition comprises subjecting the curable high heat epoxy composition to an amount of heat for a time effective to cure the composition.

Also provided is an article comprising the cured composition.

DETAILED DESCRIPTION

The inventors hereof have discovered compositions that provide desirable properties. The compositions include a high heat diepoxy compound, an auxiliary polyepoxide compound different from the high heat diepoxy compound, a core-shell particle including an elastomer core and a rigid shell, and a hardener. The curable composition can have a melt viscosity of less than 200 Pascal-seconds (Pa·s), whereas a cured product derived from the composition can have a fracture toughness of greater than 250 Joules per square meter (J/$m^2$) when measured according to ASTM D5045 and a glass transition temperature of 200°C to 270°C when measured according to ASTM D3418.

The high heat epoxy composition includes a high heat diepoxy compound. In an aspect, the high heat diepoxy composition includes 40 to 95 wt%, or 50 to 90 wt%, or 55 to 80 wt% of the high heat diepoxy compound. In an aspect, the high heat diepoxy compound has a formula and can be prepared as described as a high heat epoxy compound in PCT/US17/022128.

The high heat diepoxy compound can be one or more of formulas (I) to (X):

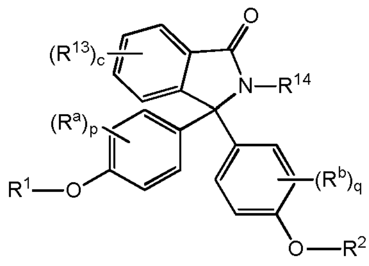 (I); 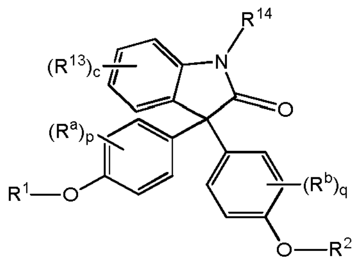 (II);

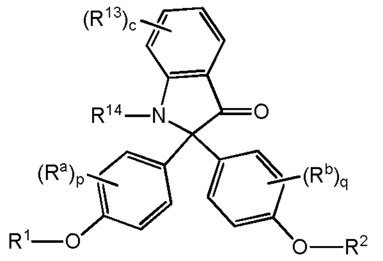 (III); 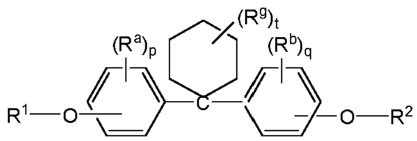 (IV);

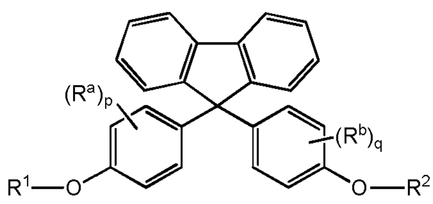 (V); 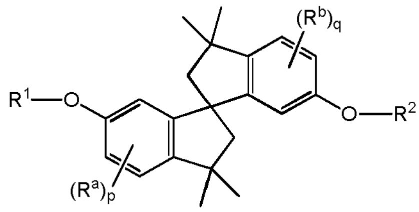 (VI);

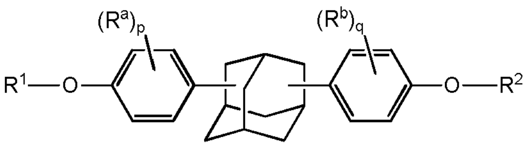 (VII); 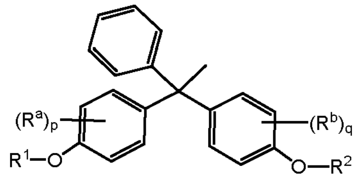 (VIII);

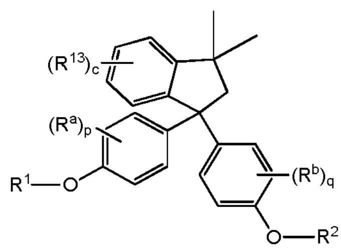 (IX); or 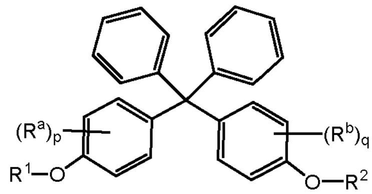 (X);

wherein $R^1$ and $R^2$ at each occurrence are each independently an epoxide-containing functional group; $R^a$ and $R^b$ at each occurrence are each independently halogen, $C_1$-$C_{12}$ alkyl, $C_2$-$C_{12}$ alkenyl, $C_3$-$C_8$ cycloalkyl, or $C_1$-$C_{12}$ alkoxy; p and q at each occurrence are each independently 0 to 4; $R^{13}$ at each occurrence is independently a halogen or a $C_1$-$C_6$ alkyl group; c at each occurrence is independently 0 to 4; $R^{14}$ at each occurrence is independently a $C_1$-$C_6$ alkyl, phenyl, or phenyl substituted with up to five halogens or $C_1$-$C_6$ alkyl groups; $R^g$ at each occurrence is independently $C_1$-$C_{12}$ alkyl or halogen, or two $R^g$ groups together with the carbon atoms to which they are attached form a four-, five, or six-membered cycloalkyl group; and t is 0 to 10. For example, $R^1$ and $R^2$ at each occurrence can each be independently of the formula (XA):

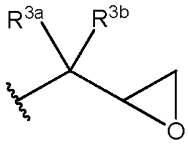 (XA)

wherein $R^{3a}$ and $R^{3b}$ are each independently hydrogen or $C_1$-$C_{12}$ alkyl. For example, $R^1$ and $R^2$ are the same and $R^{3a}$ and $R^{3b}$ are hydrogen.

In formula (XA), $R^a$ and $R^b$ at each occurrence can be each independently halogen, $C_1$-$C_{12}$ alkyl, or $C_1$-$C_{12}$ alkoxy; p and q at each occurrence are each independently 0 to 2; $R^{13}$ at each occurrence is independently a halogen or a $C_1$-$C_3$ alkyl group; c at each occurrence is independently 0 to 2; $R^{14}$ at each occurrence is independently a $C_1$-$C_6$ alkyl or phenyl; $R^g$ at each occurrence is independently $C_1$-$C_{12}$ alkyl, or two $R^g$ groups together with the carbon atoms to which they are attached form a four-, five, or six-membered cycloalkyl group; and t is 1 to 5. For example, $R^a$ and $R^b$ at each occurrence are each independently $C_1$-$C_6$ alkyl, or $C_1$-$C_6$ alkoxy; p and q at each occurrence are each independently 0 to 2; $R^{13}$ at each occurrence is independently a $C_1$-$C_3$ alkyl group; c at each occurrence is independently 0 to 2; $R^{14}$ at each occurrence is independently a $C_1$-$C_3$ alkyl or phenyl; $R^g$ at each occurrence is independently $C_1$-$C_6$ alkyl; and t is 1 to 5.

The high heat diepoxy compound can be one or more of formulas (1) to (10):

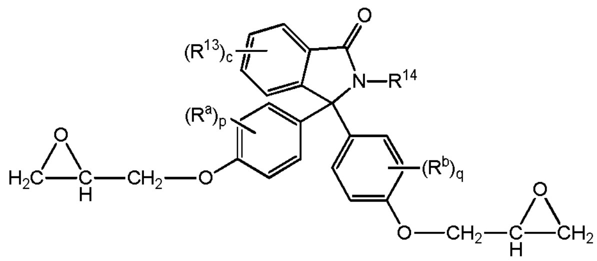 (1);

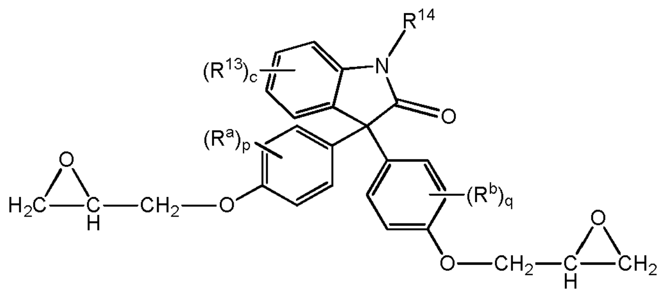 (2);

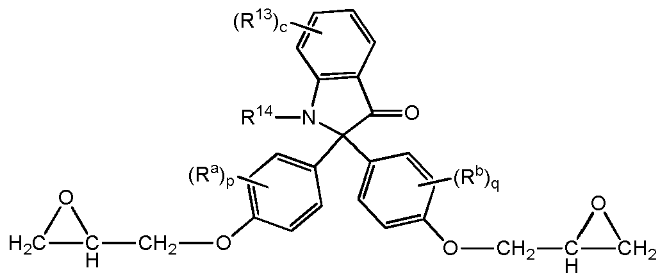 (3);

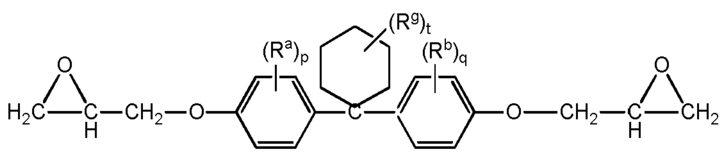 (4);

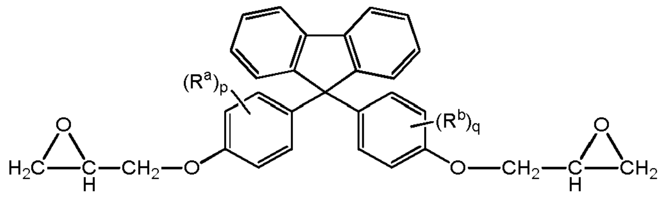
(5);

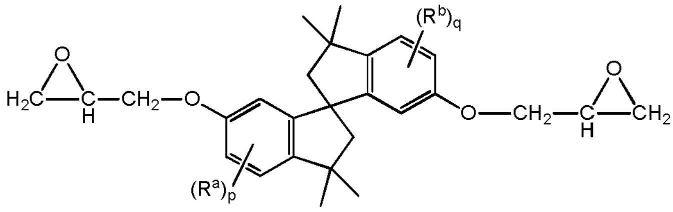
(6);

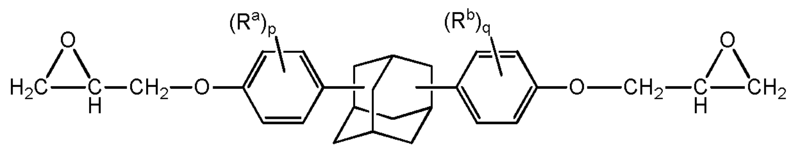
(7);

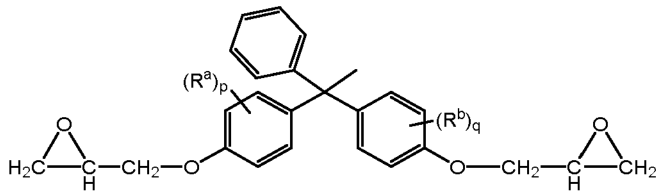
(8);

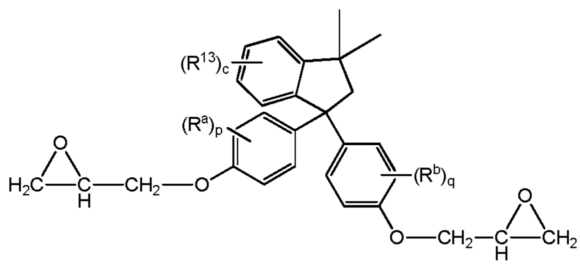
(9);

or

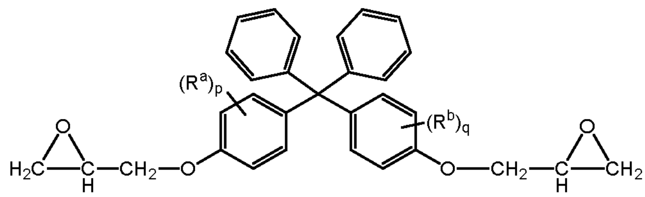
(10);

wherein $R^a$, $R^b$, $R^g$, $R^{13}$, $R^{14}$, c, p, q, and t are as defined above.

For example, the high heat diepoxy compound can have one or more of the formulas (1-a), (2-a), or (4-b):

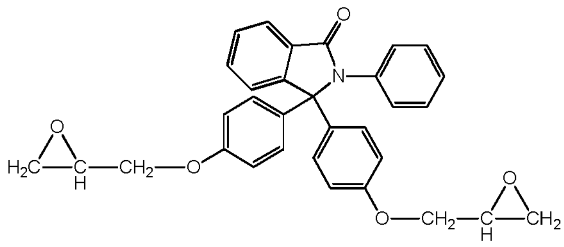

(1-a)

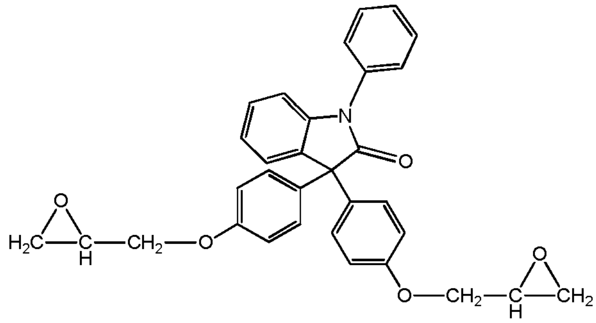

(2-a)

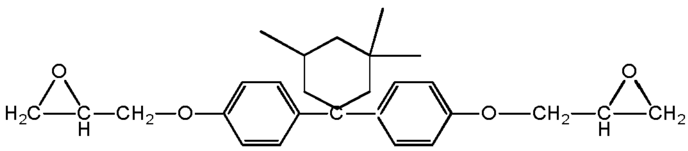

(4-b).

The high heat diepoxy compound can be prepared by methods described in, for example, WO 2016/014536. The high heat diepoxy compound can be derived from a corresponding bisphenol compound, for example, a bisphenol of formulas (1') to (10'):

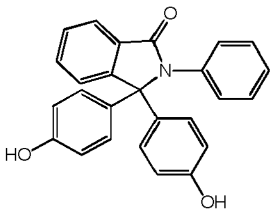

(1′-a);

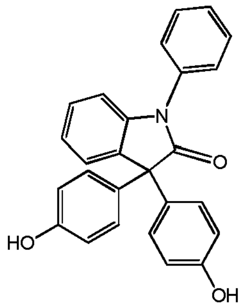

(2′-a);

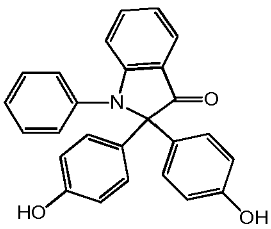

(3′-a);

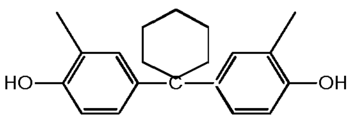

(4′-a);

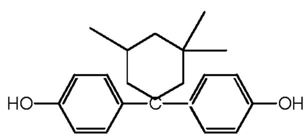

(4′-b);

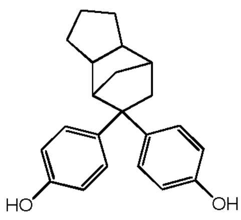

(4′-c);

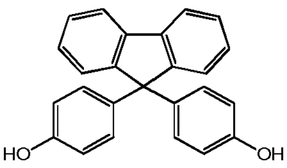 (5′-a); 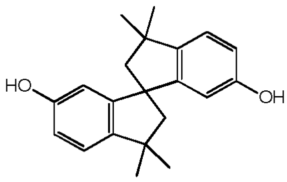 (6′-a); 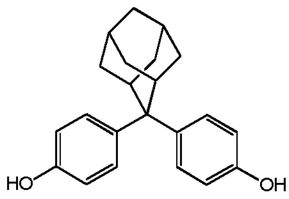 (7′-a);

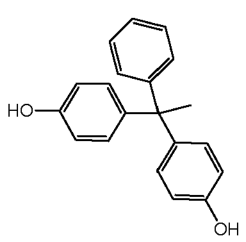 (8′-a); 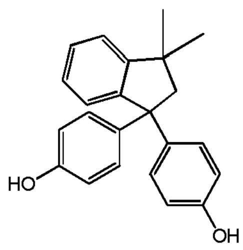 (9′-a); or 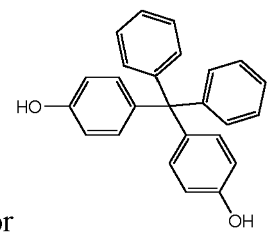 (10’-a).

The bisphenol can be provided in a mixture with an epoxide source, such as epichlorohydrin. The resultant mixture can be treated with a catalytic amount of base at a selected temperature. Exemplary bases include, but are not limited to, carbonates (e.g., sodium bicarbonate, ammonium carbonate, or dissolved carbon dioxide), and hydroxide bases (e.g., sodium hydroxide, potassium hydroxide, or ammonium hydroxide). The base can be added as a powder (e.g., powdered sodium hydroxide). The base can be added slowly (e.g., over a time period of 60 to 90 minutes). The temperature of the reaction mixture can be maintained at 20 °C to 24 °C, for example. The reaction can be stirred for a selected time period (e.g., 5 to 24 hours, or 8 to 12 hours). The reaction can be quenched by addition of an aqueous solvent, optionally along with one or more organic solvents (e.g., ethyl acetate). The aqueous layer can be extracted (e.g., with ethyl acetate), and the organic extract can be dried and concentrated. The crude product can be purified (e.g., by silica gel chromatography) and isolated. The isolated product can be obtained in a yield of 80% or greater, 85% or greater, or 90% or greater.

The composition can comprise a high heat epoxy compound wherein the purity is 95% or greater, preferably 97% or greater, preferably 99% or greater, as determined by high performance liquid chromatography (HPLC). For example, Intl. Pub. No. WO 2016/014536A1 and U.S. Pat. Pub. No. 2015/041338 disclose that high purity epoxy with low oligomer content exhibits lower viscosity, which can facilitate fiber wet out during processing to make prepregs and laminates.

The high heat epoxy compound can have a metal impurity content of 3 parts per million (ppm) or less, 2 ppm or less, 1 ppm or less, 500 parts per billion by weight (ppb) or less, 400 ppb or less, 300 ppb or less, 200 ppb or less, or 100 ppb or less. The metal impurities can be iron, calcium, zinc, aluminum, or a combination thereof. The compounds can have an unknown or unidentified impurities content of 0.1 wt% or less. The compounds can have an APHA color value of 40 or less, 35 or less, 30 or less, 25 or less, 20 or less, 19 or less, 18 or less, 17 or less, 16 or less, or 15 or less, as measured using test method ASTM D1209.

The high heat diepoxy compounds can be substantially free of epoxide oligomer impurities. The high heat diepoxy compounds can have an oligomer impurity content of less than or equal to 3 wt%, less than or equal to 2 wt%, less than or equal to 1 wt%, less than or equal to 0.5 wt%, less than or equal to 0.4 wt%, less than or equal to 0.3 wt%, less than or equal to 0.2 wt%, or less than or equal to 0.1 wt%, as determined by HPLC. The high heat diepoxy compounds can have an epoxy equivalent weight (EEW) corresponding to purity of the bisepoxide of 95% or greater, 96% or greater, 97% or greater, 98% or greater, 99% or greater, or 100%. EEW can be determined by methods known in the art, including ASTM D1652, "Standard Test Method for Epoxy Content of Epoxy Resins".

The high heat epoxy composition further includes an auxiliary polyepoxide compound that is different from the high heat diepoxy compound. In an aspect, the high heat epoxy composition includes 1 to 40 wt%, or 5 to 30 wt%, or 8 to 20 wt% of the auxiliary polyepoxide compound.

The auxiliary epoxy compound can be an aliphatic epoxy compound, cycloaliphatic epoxy compound, aromatic epoxy compound, bisphenol A epoxy compound, bisphenol F epoxy compound, phenol novolac epoxy polymer, cresol novolac epoxy polymer, biphenyl epoxy compound, triglycidyl p-aminophenol epoxy compound, tetraglycidyl diamino diphenyl methane epoxy compound, naphthalene epoxy compound, divinylbenzene dioxide compound, 2-glycidylphenylglycidyl ether, dicyclopentadiene-type epoxy compound, multi aromatic type epoxy polymer, bisphenol S epoxy compound, isocyanurate epoxy compound, hydantoin epoxy compound, or a combination comprising at least one of the foregoing. In embodiments, the auxiliary epoxy compound is a bisphenol A diglycidyl ether, a bisphenol F diglycidyl ether, a neopentylglycol diglycidyl ether, a 3,4-epoxycyclohexylmethyl- 3,4-epoxycyclohexane carboxylate, a N,N-diglycidyl-4-glycidyloxyaniline, a N,N,N',N'-tetraglycidyl-4,4'-diaminodiphenylmethane, or a combination thereof.

For example, the auxiliary polyepoxide compound can be an aliphatic epoxy compound, cycloaliphatic epoxy compound, aromatic epoxy compound, or a combination thereof. The auxiliary polyepoxide compound can have formula (10):

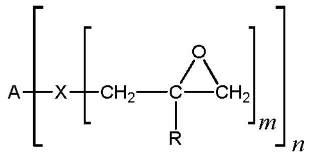 (10)

wherein A is an organic or inorganic radical of valence n, X is oxygen or nitrogen, m is 1 or 2 and consistent with the valence of X, R is hydrogen or methyl, n is 1 to 1000, specifically 1 to 8, more specifically 2 or 3 or 4, and wherein the sum of m and n is greater than 2.

Exemplary auxiliary polyepoxide compounds include those of formulas (11) to (16):

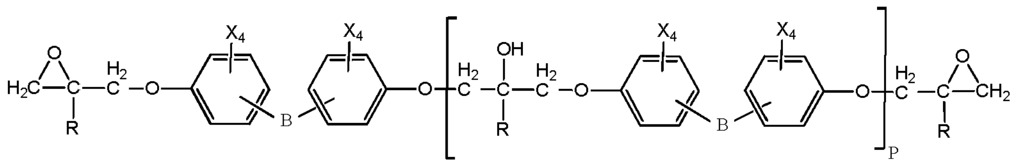 (11);

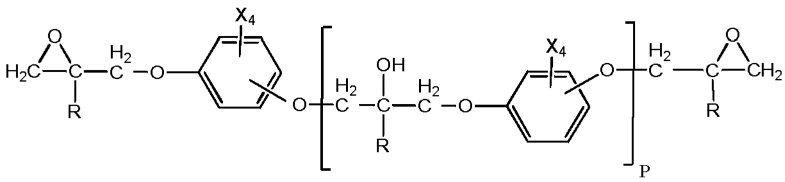 (12);

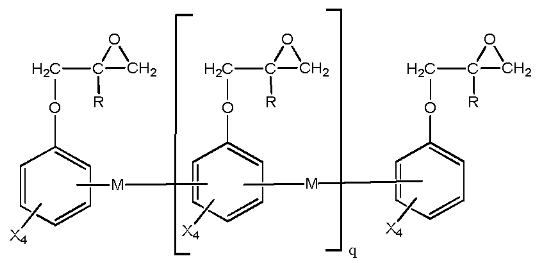 (13);

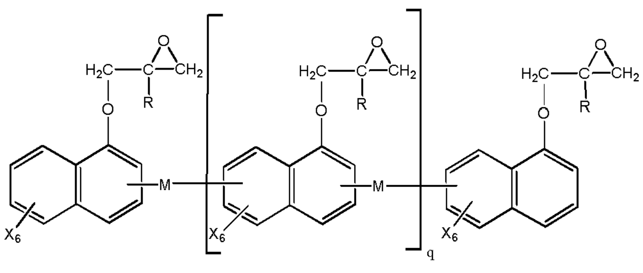 (14);

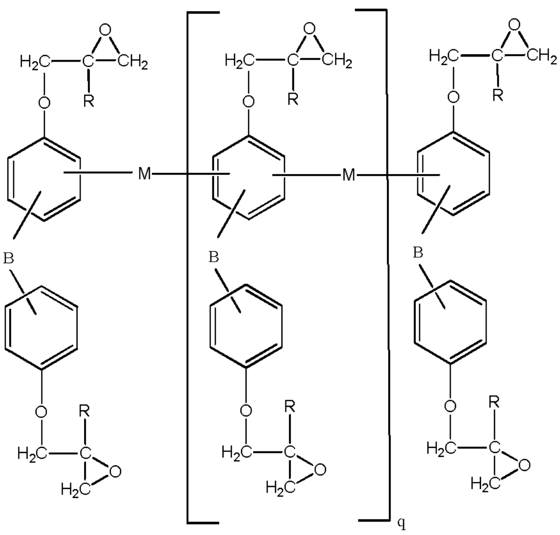

(15); and

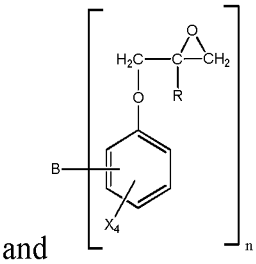

(16);

wherein each occurrence of R is independently hydrogen or methyl; each occurrence of M is independently $C_1$-$C_{18}$ hydrocarbylene optionally further comprising an oxirane, carboxy, carboxamide, ketone, aldehyde, alcohol, halogen, or nitrile; each occurrence of X is independently hydrogen, chloro, fluoro, bromo, or $C_1$-$C_{18}$ hydrocarbyl optionally further comprising a carboxy, carboxamide, ketone, aldehyde, alcohol, halogen, or nitrile; each occurrence of B is independently a carbon-carbon single bond, $C_1$-$C_{18}$ hydrocarbyl, $C_1$-$C_{12}$ hydrocarbyloxy, $C_1$-$C_{12}$ hydrocarbylthio, carbonyl, sulfide, sulfonyl, sulfinyl, phosphoryl, silane, or such groups further comprising a carboxyalkyl, carboxamide, ketone, aldehyde, alcohol, halogen, or nitrile; n is 1 to 20; and each occurrence of p and q is independently 0 to 20.

Auxiliary polyepoxide compounds include those produced by the reaction of epichlorohydrin or epibromohydrin with a phenolic compound. Exemplary phenolic compounds include resorcinol, catechol, hydroquinone, 2,6-dihydroxynaphthalene, 2,7-dihydroxynapthalene, 2-(diphenylphosphoryl)hydroquinone, bis(2,6-dimethylphenol)2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol (bisphenol A), 4,4'-isopropylidenebis(2,6-dibromophenol) (tetrabromobisphenol A), 4,4'-isopropylidenebis(2,6-dimethylphenol) (teramethylbisphenol A), 4,4'-isopropylidenebis(2-methylphenol), 4,4'-isopropylidenebis(2-allylphenol), 4,4'-(1,3-phenylenediisopropylidene)bisphenol (bisphenol M), 4,4'-isopropylidenebis(3-phenylphenol), 4,4'-(1,4-phenylenediisoproylidene)bisphenol (bisphenol P), 4,4'-ethylidenediphenol (bisphenol E), 4,4'-oxydiphenol, 4,4'-thiodiphenol, 4,4'-thiobis(2,6-dimethylphenol), 4,4'-sulfonyldiphenol, 4,4'-sulfonylbis(2,6-dimethylphenol) 4,4'-sulfinyldiphenol, 4,4'-hexafluoroisoproylidene)bisphenol (bisphenol AF), 4,4'-(1-phenylethylidene)bisphenol (bisphenol AP), bis(4-hydroxyphenyl)-2,2-dichloroethylene (bisphenol C), bis(4-hydroxyphenyl)methane (bisphenol F), bis(2,6-dimethyl-4-hydroxyphenyl)methane, 4,4'-(cyclopentylidene)diphenol, 4,4'-(cyclohexylidene)diphenol (bisphenol Z), 4,4'-(cyclododecylidene)diphenol 4,4'-(bicyclo[2.2.1]heptylidene)diphenol, 4,4'-(9H-fluorene-9,9-diyl)diphenol, 3,3-bis(4-hydroxyphenyl)isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol (spirobiindane), dihydroxybenzophenone (bisphenol K), tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tris(3,5-dimethyl-4-hydroxyphenyl)methane, tetrakis(4-hydroxyphenyl)ethane, tetrakis(3,5-dimethyl-4-hydroxyphenyl)ethane, bis(4-hydroxyphenyl)phenylphosphine oxide, dicyclopentadienylbis(2,6-dimethyl phenol), dicyclopentadienyl bis(2-methylphenol), dicyclopentadienyl bisphenol, or the like, and combinations thereof.

Examples of auxiliary polyepoxide compounds are polyepoxides based on aromatic amines, such as aniline, for example N,N-diglycidylaniline, diaminodiphenylmethane and cycloaliphatic epoxy compounds such as 3,4-epoxycyclohexylmethyl-3,4-epoxycyclohexane carboxylate, 4,4'-(1,2-epoxyethyl)biphenyl, 4,4'-di(1,2-epoxyethyl)diphenyl ether, and bis(2,3-epoxycyclopentyl)ether. Other examples of auxiliary polyepoxide compounds are mixed multifunctional epoxy compounds obtained from compounds that contain a combination of functional groups mentioned above, for example 4-aminophenol.

Examples auxiliary polyepoxide compounds include the glycidyl ethers of phenolic compounds such as the glycidyl ethers of phenol-formaldehyde novolac, alkyl substituted phenol-formaldehyde compounds including cresol-formaldehyde novolac, t-butylphenol-formaldehyde novolac, sec-butylphenol-formaldehyde novolac, t-octylphenolformaldehyde novolac, cumylphenol-formaldehyde novolac, decylphenol-formaldehyde novolac. Other exemplary auxiliary polyepoxide compounds are the glycidyl ethers of bromophenol-formaldehyde novolac, chlorophenolformaldehyde novolac, phenol-bis(hydroxymethyl)benzene novolac, phenol-bis(hydroxymethylbiphenyl) novolac, phenolhydroxybenzaldehyde novolac, phenol-dicylcopentadiene novolac, naphthol-formaldehyde novolac, naphthol-bis(hydroxymethyl)benzene novolac, naphthol-bis(hydroxymethylbiphenyl) novolac, naphthol-hydroxybenzaldehyde novolac, and naphthol-dicylcopentadiene novolacs, or the like, and combinations thereof.

Examples of auxiliary polyepoxide compounds include those based on heterocyclic ring systems, for example hydantoin epoxy compounds, triglycidyl isocyanurate and its oligomers, N-glycidyl phthalimide, N-glycidyltetrahydrophthalimide, urazole epoxides, uracil epoxides, and oxazolidinone-modified epoxy compounds. Oxazolidinone-modified auxiliary polyepoxide compounds include those disclosed in Angew. Makromol. Chem., vol. 44, (1975), pages 151-163, and U.S. Patent No. 3,334,110 to Schramm. An example is the reaction product of bisphenol A diglycidyl ether with diphenylmethane diisocyanate in the presence of an appropriate accelerator.

Further examples of auxiliary polyepoxide compounds include polyglycidyl esters that are obtained by reacting epichlorohydrin or similar epoxy compounds with an aliphatic, cycloaliphatic, or aromatic polycarboxylic acid, such as oxalic acid, adipic acid, glutaric acid, phthalic, isophthalic, terephthalic, tetrahydrophthalic or hexahydrophthalic acid, 2,6-naphthalenedicarboxylic acid, and dimerized fatty acids. Examples include diglycidyl terephthalate and diglycidyl hexahydrophthalate. Moreover, polyepoxide compounds that contain the epoxide groups in random distribution over the molecule chain and which can be prepared by emulsion copolymerization using olefinically unsaturated compounds that contain these epoxide groups, such as, for example, glycidyl esters of acrylic or methacrylic acid, can be used.

Other exemplary auxiliary polyepoxide compounds include the polyglycidyl ethers of polyhydric aliphatic alcohols. Examples of such polyhydric alcohols include 1,4-butanediol, 1,6-hexanediol, neopentyl glycol, polyalkylene glycols, glycerol, trimethylolpropane, 2,2-bis(4-hydroxycyclohexyl)propane, and pentaerythritol.

Examples of mono-functional auxiliary polyepoxide compounds include 2-ethylhexyl glycidyl ether, butyl glycidyl ether, phenyl glycidyl ether, t-butyl glycidyl ether, o-cresyl glycidyl ether, and nonyl phenol glycidyl ether.

Other exemplary auxiliary polyepoxide compounds include styrene oxide, neohexene oxide, divinylbenzene dioxide, an epoxycyclohexane carboxylate such as a 3,4-epoxycyclohexylmethyl-3,4-epoxycyclohexane carboxylate, and a dicyclopentadiene-type epoxy compound such as dicyclopentadiene diepoxide.

Auxiliary polyepoxide compounds can be prepared by further condensation of an epoxy compound with a phenol such as a bisphenol. An example is the condensation of bisphenol A with a bisphenol A diglycidyl ether to produce an oligomeric diglycidyl ether. In another example a phenol dissimilar to the one used to derive the epoxy compound can be used. For example, tetrabromobisphenol A can be condensed with bisphenol A diglycidyl ether to produce an oligomeric diglycidyl ether containing halogens.

The auxiliary polyepoxide compound can be a solid at room temperature. Thus, in some aspects, the epoxy compound has a softening point of 25°C to 150°C. Softening points can be determined, for example, by differential scanning calorimetry (DSC), dynamic mechanical analysis (DMA), or ring and ball test methods as described in ASTM E28-67, ASTM E28-99, ASTM D36, ASTM D6493-11, and ISO 4625. The auxiliary polyepoxide compound can be a liquid or a softened solid at room temperature. For example, the auxiliary polyepoxide compound can have a softening point of less than 25°C.

The curable high heat epoxy composition includes one or more hardeners. The term "hardener" as used herein encompasses compounds whose roles in curing epoxy compounds are variously described as those of a curing agent, hardener, accelerator, catalyst, cocatalyst, or the like. The amount of hardener will depend on the type of hardener, as well as the identities and amounts of the other components of the composition. The epoxy composition can include the hardener in an amount of 0.5 to 50 wt%, preferably 2.5 to 25 wt%, more preferably 5 to 15 wt%, based on the total weight of the composition.

The hardener can be an amine compound such as an aromatic diamaine. Exemplary amine compounds include, but are not limited to, 4-aminophenyl sulfone (DDS), 4,4'-methylenedianiline, diethyltoluenediamine, 4,4'-methylenebis(2,6-diethylaniline), m-phenylenediamine, p-phenylenediamine, 2,4-bis(p-aminobenzyl)aniline, 3,5-diethyltoluene-2,4-diamine, 3,5-diethyltoluene-2,6-diamine, m- xylylenediamine, p-xylylenediamine, a diethyl toluene diamine, or a combination thereof. In a particular aspect, the amine compound can be 4-aminophenyl sulfone (DDS), 4,4'-methylenebis-(2,6-diethylaniline) (MDEA), or a combination thereof. In an aspect, the hardener is methyl-5-norbornene-2,3-dicarboxylic anhydride (NMA).

The hardener can be an aromatic dianhydride. Examples of aromatic dianhydride hardeners include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride;

4-(2,3-dicarboxyphenoxy)-4'-(3,4-dicarboxyphenoxy)diphenyl sulfone dianhydride; 4,4'-(4,4'-isopropylidenediphenoxy)bis-(phthalic anhydride), 4,4'-(hexafluoroisopropylidene)diphthalic anhydride, 4,4'-oxydiphthalic anhydride, benzophenone-3,3',4,4'-tetracarboxylic dianhydride, 3,3',4,4'-biphenyltetracarboxylic dianhydride, or the like.

The hardener can be a bicyclic anhydride, such as methyl-5-norbornene-2,3-dicarboxylic anhydride, cis-5-norbornene-endo-2,3-dicarboxylic anhydride, or the like.

Other hardeners include heterocyclic compounds including benzotriazoles; triazines; piperazines; imidazoles such as 1-methylimidazole; cyclic amidine such as 4-diazabicyclo(2,2,2)octane, diazabicycloundecene, 2-phenyl imidazoline, or the like; N,N-dimethylaminopyridine; a sulfamidate; or a combination thereof.

The curable high heat epoxy composition includes a core-shell particle in amounts of 0.01 to 12 wt%, preferably 0.1 to 10 wt%, more preferably 1 to 8 wt%, based the total weight of the composition. The core-shell particles can comprise an elastomer core and a rigid shell. For example, the core-shell particles can include elastomer-modified graft copolymers comprising (i) an elastomeric polymer substrate having a $T_g$ of less than 10°C, specifically less than -10°C, or more specifically -40°C to -80°C, and (ii) a rigid polymeric superstrate grafted to the elastomeric polymer substrate. Elastomer-modified graft copolymers can be prepared by first providing the elastomeric polymer, then polymerizing the constituent monomer(s) of the rigid phase in the presence of the elastomer to obtain the graft copolymer. The grafts can be attached as graft branches or as shells to an elastomer core. The rigid shell can physically encapsulate the elastomer core, or the rigid shell can be partially or essentially completely grafted to the elastomer core. For example, the core-shell particle can be as described as an impact modifier in U.S. Pub. No. 2007/0027233.

Materials for use as the elastomer core include, for example, conjugated diene monomers; copolymers of a conjugated diene with less than 50 wt% of a copolymerizable monomer such as a conjugated diene-monovinylaromatic copolymer; polyolefin elastomers such as ethylene propylene copolymers (EPR) or ethylene-propylene-diene monomer rubbers (EPDM); ethylene-vinyl acetate rubbers; silicone rubbers; elastomeric $C_1$-$C_8$ alkyl (meth)acrylates; elastomeric copolymers of $C_1$-$C_8$ alkyl (meth)acrylates with butadiene and/or styrene; or a combination thereof. For example, the elastomer core can be a particulate, moderately cross-linked conjugated butadiene or ($C_4$-$C_8$ alkyl) (meth)acrylate rubber, and optionally has a gel content of greater than 70%. In a preferred aspect, the core-shell particle comprises an elastomer core derived from a conjugated diene or a conjugated diene-monovinylaromatic copolymer, preferably butadiene or styrene-butadiene copolymer.

Examples of conjugated diene monomers for preparing the elastomer core are of formula (19):

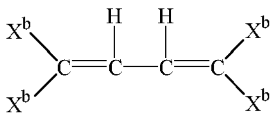

(19)

wherein each $X^b$ is independently hydrogen, $C_1$-$C_5$ alkyl, or the like. Exemplary conjugated diene monomers are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, or the like, or a combination thereof. Specific conjugated diene homopolymers include polybutadiene and polyisoprene.

Copolymers of a conjugated dienes include, for example, those produced by aqueous radical emulsion polymerization of a conjugated diene and one or more monomers copolymerizable therewith. Exemplary monomers for copolymerization with the conjugated diene include monovinylaromatic monomers containing condensed aromatic ring structures, such as vinyl naphthalene, vinyl anthracene or the like, or monomers of formula (20):

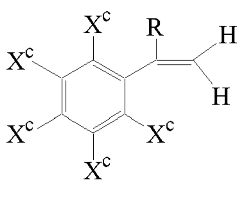

(20)

wherein each $X^c$ is independently hydrogen, $C_1$-$C_{12}$ alkyl, $C_3$-$C_{12}$ cycloalkyl, $C_6$-$C_{12}$ aryl, $C_7$-$C_{12}$ aralkyl, $C_7$-$C_{12}$ alkaryl, $C_1$-$C_{12}$ alkoxy, $C_3$-$C_{12}$ cycloalkoxy, $C_6$-$C_{12}$ aryloxy, chloro, bromo, or hydroxy, and R is hydrogen, $C_1$-$C_5$ alkyl, bromo, or chloro. Styrene and/or alpha-methylstyrene can be used as monomers copolymerizable with the conjugated diene monomer.

Other exemplary monomers that can be copolymerized with the conjugated diene monomers include monovinylic monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of formula (21):

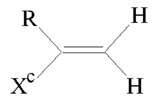

(21)

wherein R is hydrogen, $C_1$-$C_5$ alkyl, bromo, or chloro, and $X^c$ is cyano, $C_1$-$C_{12}$ alkoxycarbonyl, $C_1$-$C_{12}$ aryloxycarbonyl, hydroxy carbonyl, or the like. Specific monomers such as n-butyl acrylate, ethyl acrylate, and 2-ethylhexyl acrylate can be used as monomers copolymerizable with the conjugated diene monomer. Combinations of the foregoing monovinyl monomers and monovinylaromatic monomers can be used.

Examples of (meth)acrylate monomers for use in the elastomer core include cross-linked, particulate emulsion homopolymers or copolymers of $C_{1-8}$ alkyl (meth)acrylates, in particular $C_{4-6}$ alkyl acrylates, for example n-butyl acrylate, t-butyl acrylate, n-propyl acrylate, isopropyl acrylate, 2-ethylhexyl acrylate, or the like, or a combination thereof. The $C_1$-$C_8$ alkyl (meth)acrylate monomers can optionally be polymerized in admixture with up to 15 wt% of comonomers of formulas (19), (20), or (21). Exemplary comonomers include but are not limited to butadiene, isoprene, styrene, methyl methacrylate, phenyl methacrylate, phenethylmethacrylate, N-cyclohexylacrylamide, vinyl methyl ether or acrylonitrile, or a combination thereof. Optionally, up to 5 wt% a polyfunctional crosslinking comonomer can be present, for example divinylbenzene, alkylenediol di(meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, or the like, or a combination thereof.

The elastomer core can provide 5 to 95 wt% of the total weight of the core-shell particle, more specifically 20 to 90 wt%, and even more specifically 40 to 85 wt% of the total weight of the core-shell particle, the remainder being the rigid shell.

The elastomer core can be polymerized by mass, emulsion, suspension, solution, or combined processes such as bulk-suspension, emulsion-bulk, bulk-solution, or other techniques, using continuous, semibatch, or batch processes. The particle size of the elastomer core is not critical. For example, an average particle size of 0.001 to 25 micrometers ($\mu$m), specifically 0.01 to 15 $\mu$m, more specifically 0.1 to 8 $\mu$m can be used for emulsion based polymerized rubber substrates. A particle size of 0.5 to 10 $\mu$m, specifically 0.6 to 1.5 $\mu$m can be used for bulk polymerized rubber substrates. Particle size can be measured by light transmission methods or capillary hydrodynamic chromatography (CHDF).

The rigid shell of the elastomer-modified graft copolymer can be formed by graft polymerization of a monovinylaromatic monomer and optionally one or more comonomers in the presence of one or more elastomeric polymer substrates. The above-described monovinylaromatic monomers of formula (20) can be used in the rigid graft phase, including styrene, alpha-methyl styrene, halostyrenes such as dibromostyrene, vinyltoluene, vinylxylene, butylstyrene, para-hydroxystyrene, methoxystyrene, or the like, or a combination thereof. Comonomers include, for example, the above-described monovinylic monomers and/or monomers of formula (21). Specific examples of comonomers for use in the rigid shell include acrylonitrile, ethacrylonitrile, methacrylonitrile, methyl (meth)acrylate, ethyl (meth)acrylate, n-propyl (meth)acrylate, isopropyl (meth)acrylate, or the like, or a combination thereof.

The relative ratio of monovinylaromatic monomer and comonomer in the rigid shell can depend on the elastomer substrate, monovinylaromatic monomer(s), comonomer(s), and the desired properties of the core-shell particle. The rigid core can comprise up to 100 wt% of monovinyl aromatic monomer, specifically 30 to 100 wt%, more specifically 50 to 90 wt% monovinylaromatic monomer, with the balance being comonomer(s).

Depending on the amount of elastomer-modified graft polymer present, a separate matrix or continuous phase of ungrafted rigid polymer or copolymer can be simultaneously obtained along with the elastomer-modified graft copolymer. These core-shell particles can comprise 40 to 95 wt% elastomer-modified graft copolymer and 5 to 60 wt% graft (co)polymer, based on the total weight of the core-shell particle. For example, the core-shell particles can comprise 50 to 85 wt%, more specifically 75 to 85 wt% of rubber-modified graft copolymer, together with 15 to 50 wt%, more specifically 15 to 25 wt% of graft (co)polymer, based on the total weight of the core-shell particle.

The elastomer-modified core-shell particles can include structural units derived from at least one silicone rubber monomer, a branched acrylate rubber monomer having the formula $H_2C{=}C(R^d)C(O)OCH_2CH_2R^e$, wherein $R^d$ is hydrogen or a $C_1$-$C_8$ linear or branched hydrocarbyl, and $R^e$ is a branched $C_3$-$C_{16}$ hydrocarbyl; a first graft link monomer; a polymerizable alkenyl-containing organic material; and a second graft link monomer. The silicone rubber monomer can be, for example, a cyclic siloxane, tetraalkoxysilane, trialkoxysilane, (acryloxy)alkoxysilane, (mercaptoalkyl)alkoxysilane, vinylalkoxysilane, or allylalkoxysilane.

Exemplary branched acrylate rubber monomers include iso-octyl acrylate, 6-methyloctyl acrylate, 7-methyloctyl acrylate, 6-methylheptyl acrylate, or the like. The polymerizable alkenyl-containing organic material can be, for example, styrene, alpha-methylstyrene, acrylonitrile, methacrylonitrile, or an unbranched (meth)acrylate such as methyl methacrylate, 2-ethylhexyl methacrylate, methyl acrylate, ethyl acrylate, n-propyl acrylate, or the like.

The first graft link monomer can be an (acryloxy)alkoxysilane, a (mercaptoalkyl)alkoxysilane, a vinylalkoxysilane, or an allylalkoxysilane, for example, (gamma-methacryloxypropyl)(dimethoxy)methylsilane and (3-mercaptopropyl)trimethoxysilane. The second graft link monomer can be a polyethylenically unsaturated compound having at least one allyl group, such as allyl methacrylate, triallyl cyanurate, or triallyl isocyanurate, or the like.

Exemplary core-shell particles can be a natural rubber, low-density polyethylene, high-density polyethylene, polypropylene, polystyrene, polybutadiene, styrene-butadiene, styrene-butadiene-styrene, styrene-ethylene-butadiene-styrene, acrylonitrile-butadiene-styrene, acrylonitrile-ethylene-propylene-diene-styrene, styrene-isoprene-styrene, methyl methacrylate-butadiene-styrene, methyl methacrylate-acrylonitrile butadiene-styrene, styrene-acrylonitrile, ethylene-propylene copolymer, ethylene-propylene-diene terpolymer, ethylene-methyl acrylate, an ethylene-ethyl acrylate, an ethylene-vinyl acetate copolymer, an ethylene-glycidyl methacrylate copolymer, a polyethylene terephthalate-poly(tetramethyleneoxide)glycol block copolymer, a polyethylene terephthalate/isophthalate-poly(tetramethyleneoxide)glycol block copolymer, a silicone rubber, or a combination thereof.

The composition can include one or more additives ordinarily incorporated in compositions of this type, preferably with the proviso that the additive(s) are selected so as to not significantly adversely affect the desired properties of the composition. Mixtures of additives can be used. Exemplary additives include, but are not limited to, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, flame retardant, anti-drip agent (e.g., a PTFE-encapsulated styrene-acrylonitrile copolymer (TSAN)), or a combination thereof.

In an aspect, the curable high heat epoxy composition does not contain a solvent. The curable high heat epoxy composition can include a solvent to prepare homogeneous epoxy blends and then the solvent can be removed.

A method for the manufacture of a cured epoxy composition is also provided. The method includes subjecting the curable high heat epoxy composition to an amount of heat for a time effective to cure the composition. As used herein, a "cured epoxy composition" is synonymous with the cured product of the curable high heat epoxy composition.

In an aspect, the cured product of the curable high heat epoxy composition has fracture toughness that is at least 50% greater, preferably at least 100% greater, more preferably at least 200% greater, than the fracture toughness of a cured sample of the same high heat epoxy composition with 0 wt% of the core-shell particle, wherein the fracture toughness is measured as per ASTM D5045.

In an aspect, the cured product derived from the curable high heat epoxy composition has a fracture toughness of greater than 170 $J/m^2$, preferably 200 to 800 $J/m^2$, more preferably 300 to 800 $J/m^2$, even more preferably 400 to 800 $J/m^2$, when measured according to ASTM D5045.

In an aspect, the cured product derived from the curable high heat epoxy composition has a glass transition temperature of 200°C to 270°C, preferably 220°C to 270°C, more preferably 240°C to 270°C, when measured according to ASTM D3418.

In a particular aspect, the curable high heat epoxy composition has a viscosity of less than 200 Pa·s, preferably 5 to 100 Pa·s, more preferably 5 to 50 Pa·s, when measured at 90°C; a cured product derived from the curable high heat epoxy composition has a fracture toughness of greater than 170 $J/m^2$, preferably 200 to 600 $J/m^2$, more preferably 225 to 500 $J/m^2$, when measured according to ASTM D5045; and the cured product derived from the curable high heat epoxy composition has a glass transition temperature of 200°C to 270°C, preferably 220°C to 270°C, more preferably 220°C to 260°C, when measured according to ASTM D3418; for example, the hardener comprises an aromatic diamine having a melting point of less than 150°C, preferably wherein the hardener is 4,4'-methylenedianiline, diethyltoluenediamine, 4,4'-methylenebis(2,6-diethyl aniline), m-phenylenediamine, p-phenylenediamine, 2,4-bis(p-aminobenzyl)aniline, 3,5-diethyltoluene-2,4-diamine, 3,5-diethyltoluene-2,6-diamine, m-xylylenediamine, p-xylylenediamine, or a combination thereof.

In a particular aspect, a cured product derived from the curable high heat epoxy composition has a fracture toughness of greater than 250 $J/m^2$, preferably 300 to 800 $J/m^2$, more preferably greater than 400 to 800 $J/m^2$, when measured according to ASTM D5045; and the cured product derived from the curable high heat epoxy composition has a glass transition temperature of 200°C to 275°C, preferably 220°C to 275°C, more preferably 240°C to 275°C, when measured according to ASTM D3418, for example, wherein the hardener comprises an anhydride or an aromatic diamine compound having a melting point of 150°C or greater, preferably wherein the hardener is 4,4'-diamino diphenyl sulfone, 3,3'-diamino diphenyl sulfone, 4,4'-bis(3,4-dicarboxyphenoxy)diphenyl sulfone dianhydride, 4,4'-bis(2,3-dicarboxyphenoxy)diphenyl sulfone dianhydride, 4-(2,3-dicarboxyphenoxy)-4'-(3,4-dicarboxyphenoxy)diphenyl sulfone dianhydride, or a combination thereof.

A method for the manufacture of an epoxy thermoset comprises polymerizing and crosslinking the curable high heat epoxy composition described herein. The epoxy thermoset can be used in a variety of forms for various purposes, including a composite (e.g. composite materials such as those using carbon fiber and fiberglass reinforcements), a foam, a fiber, a layer, a coating, an encapsulant, an adhesive, a sealant, a sizing resin, a prepreg, a casing, a component, or a combination comprising one or more of the foregoing. The epoxy thermosets can be used to form a number of articles in the aerospace, automobile, and other industries.

In certain aspects, the composite is a glass fiber-based composite, a carbon fiber-based composite, or a combination thereof.

Methods of forming a composite can include impregnating a reinforcing structure with a curable composition such as the curable high heat epoxy composition; partially curing the curable composition to form a prepreg; and laminating a plurality of prepregs; wherein the curable high heat epoxy composition optionally includes an auxiliary co-monomer, and optionally, one or more additional additives.

Applications for the curable high heat epoxy compositions include, for example, acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; printed circuit boards; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and flarings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multi-element assemblies; sealing of electromechanical devices; battery cases; resistors; fuses and thermal cutoff devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toners for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other applications.

The compositions and methods described herein are further illustrated by the following non-limiting examples.

## EXAMPLES

The following components were used in the examples. Unless specifically indicated otherwise, the amount of each component is in weight percent (wt%) based on the total weight of the composition.

Table 1.

| Component | Description | Source |
|---|---|---|
| PPPBP-epoxy | 1,1-bis(4-epoxyphenyl)-N-phenylphthalimidine with an epoxy equivalent weight of 252.5 grams/equivalent | SABIC |
| TGPAP | Triglycidyl-p-aminophenol with an epoxy equivalent weight of 97 grams/equivalent | Sigma-Aldrich |
| TGDDM | Tetraglycidyldiaminodiphenylmethane with an epoxy equivalent weight of 117grams/equivalent (available under the tradename ARALDITE MY 721) | Huntsman Advanced |
| MDEA | 4,4'-Methylenebis-(2,6-diethylaniline) | Sigma-Aldrich |
| DDS | 4,4'-Diaminodiphenyl sulfone | Sigma-Aldrich |
| CSR-1 | 75% by mass of TGPAP as an epoxy resin and 25% by mass of core-shell rubber particles (core part: styrene-butadiene, shell part: a methyl methacrylate/glycidyl methacrylate/styrene copolymer), epoxy equivalent weight of 130 grams/equivalent (available under the tradename MX451) | Kaneka |

(continued)

| Component | Description | Source |
|---|---|---|
| CSR-2 | 75% by mass of TGDDM as an epoxy resin and 25% by mass of core-shell rubber particles (core part: cross-linked polybutadiene, shell part: a methyl methacrylate/ glycidyl methacrylate/styrene copolymer), epoxy equivalent weight of 148 grams/ equivalent (available under the tradename MX416) | Kaneka |
| Mold Max 40 | Silicone rubber compound | Smooth-on Inc. |
| Ease Release 200 | Mold release agent | Smooth-on Inc. |
| EPON 828 | Poly(bisphenol A-co-epichlorohydrin), CAS Reg. No. 25068-38-6, with an epoxy equivalent weight of 187.5 grams/equivalent (available under the tradename EPON 828) | Hexion |

Silicone Mold Preparation

Silicone molds were prepared as follows. An aluminum mold was heated to 115°C for 12 to 18 hours and allowed to cool to room temperature (23°C), and then a mold release agent (Ease Release 200) was applied thereto and allowed to dry in inert atmosphere. A silicone rubber compound (Moldmax 40) was degassed in a vacuum oven at room temperature for about 15 mins, and then poured into the aluminum mold. The silicone rubber compound was cured at room temperature (23°C) for 16-18 hours to provide a silicone mold. Thereafter, the silicone mold was removed from the aluminum mold and placed in a convection oven for 16-18 hours to remove traces of moisture and solvent.

Sample Preparation

Preparation of TGDDM and TGPAP castings. TGDDM (or TGPAP) was heated to 140°C in a reaction kettle. After equilibration of the contents in the kettle, a requisite amount of curing agent (DDS or MDEA) was dissolved in the warm epoxy with stirring. The warm, homogeneous epoxy/curing agent solution was degassed under vacuum, poured into a silicone mold which was preheated to 140°C, and then cured.

Preparation of TGDDM and TGPAP castings with core-shell rubber particles. TGDDM (or TGPAP) was heated to 140°C in a reaction kettle. After equilibration of the contents in the kettle, the requisite amount of core-shell rubber particles (CSR-1 or CSR-2) were added to the kettle and stirred until a homogenous solution was obtained. Curing agent (DDS or MDEA) was melted separately and then added to the reaction kettle while maintaining agitation. The contents of the reaction kettle were degassed under vacuum, poured into a silicone mold which was preheated to 140°C, and cured.

Preparation of PPPBP-epoxy castings. PPPBP-epoxy was heated to 165°C in a reaction kettle until completely melted. After a homogeneous solution was obtained, the reaction was cooled to 140°C and a requisite amount of curing agent (DDS or MDEA) was added to the flask and allowed to dissolve in the warm epoxy solution by stirring. The warm, homogeneous epoxy/curing agent solution was degassed under vacuum, poured into a silicone mold which was preheated to 140°C, and cured.

Preparation of PPPBP-epoxy castings with auxiliary polyepoxide. PPPBP-epoxy and a liquid auxiliary polyepoxide (TGDDM or TGPAP) were heated to 165 °C in a reaction kettle. When all the PPPBP-epoxy was melted and a homogenous solution was obtained, the reaction kettle was allowed to cool to 145°C. After equilibration of the contents in the kettle, a requisite amount of curing agent (DDS) that was melted separately was added to the reaction kettle while maintaining agitation. The contents of the reaction kettle were degassed under vacuum, poured into a silicone mold which was preheated to 140°C, and cured.

Preparation of PPPBP-epoxy castings with auxiliary polyepoxide and core-shell rubber particles. PPPBP-epoxy and a liquid auxiliary polyepoxy (TGDDM or TGPAP) were heated to 165 °C in a reaction kettle. When all the PPPBP-epoxy was melted and a homogenous solution was obtained, the reaction kettle was allowed to cool to 145°C. After equilibration of the contents in the kettle, a requisite amount of core-shell rubber particles (CSR-1 or CSR-2) were added to the kettle and stirred until a homogenous solution was obtained. Curing agent (DDS or MDEA) was melted separately and added to the reaction kettle while maintaining agitation. The contents of the reaction kettle were degassed under vacuum, poured into a silicone mold which was preheated to 140°C, and cured.

Preparation of EPON 828 castings. EPON 828 and a liquid auxiliary polyepoxide (TGDDM or TGPAP) were heated to 140°C in a reaction kettle. After equilibration of the contents in the kettle, a requisite amount of curing agent (MDEA), which was melted separately, was added to the reaction kettle while maintaining agitation. The contents of the

reaction kettle were degassed under vacuum, poured into a silicone mold which was preheated to 140°C, and cured.

Preparation of EPON 828 castings with core-shell rubber particles. EPON 828 and a liquid auxiliary polyepoxide (TGDDM or TGPAP) were heated to 140°C in a reaction kettle. After equilibration of the contents in the kettle, a requisite amount of core-shell rubber particles (CSR-1 or CSR-2) were added to the kettle and stirred until a homogenous solution was obtained. Curing agent (MDEA) was melted separately and added to the reaction kettle while maintaining agitation. The contents of the reaction kettle were degassed under vacuum, poured into a silicone mold which was preheated to 140°C, and cured.

Curing Protocol

The silicone mold including the curable composition was heated in an oven at 140°C for 60 minutes, 160°C for 60 minutes, 180°C for 60 minutes, 200°C for 30 minutes, and 220°C for 30 minutes. After cooling to room temperature (23°C), the resulting compact tension (CT) casting was removed from the silicone mold for testing.

Sample Testing

Differential scanning calorimetry (DSC) was used to determine glass transition temperature ($T_g$) as per ASTM D3418 with a TA Q1000 DSC. In a typical procedure, a polymer sample (10-20 mg) was heated from 40°C to 325°C (20°C/min), held at 325°C for 1 min, cooled to 40°C (20°C/min), held at 40°C for 1 min, and the heating/cooling cycle was repeated. The second heating cycle is used to obtain $T_g$.

For pre-cracking and fracture toughness testing, the CT castings were milled to achieve a flat, uniform surface. CT castings were dry-polished with 600 grit sand paper to a final thickness of 8 mm. Pre-cracking was performed using a drop weight tower as set forth in WO 2017/011332.

After pre-cracking, castings were mounted on a tension test clevis and tested under opening mode I load, applied with a universal test machine (Zwick Z2.5). Loads were applied under displacement control at 1 mm/min. Post-test, fractured surfaces of the samples were evaluated by light microscopy to measure the crack length. The crack length (a) and load at fracture (P) were used to calculate fracture toughness according to ASTM D5045 according to Equations 1 and 2:

$$K = \frac{P}{B\sqrt{W}} f(a/W) \quad \text{(Equation 1)}$$

$$f(a/W) = \frac{2+\frac{a}{W}}{\left(1-\frac{a}{W}\right)^{3/2}} \left[ \begin{array}{l} 0.886+4.64\left(\frac{a}{W}\right)-13.32\left(\frac{a}{W}\right)^2 \\ +14.72\left(\frac{a}{W}\right)^3-5.60\left(\frac{a}{W}\right)^4 \end{array} \right] \quad \text{(Equation 2)}$$

where P is load, a is pre-crack length measured from the center of the loading holes, W is specimen length measured from the center of the loading holes, and B is sample thickness.

The compositions and fracture toughness for Examples 1-12 are shown in Table 2. The amount of MDEA is included such that there is a 15 mol% greater number of epoxy groups relative to the number of amine hydrogens in the composition.

Table 2.

| Ex. | PPPBP-epoxy | TGPAP | TGDDM | CSR-1 | CSR-2 | MDEA | CSR (%)* | Fracture Toughness ($J/m^2$) |
|---|---|---|---|---|---|---|---|---|
| 1 | 0.0 | 58.5 | 0.0 | 0.0 | 0.0 | 41.5 | 0.0 | 224 |
| 2 | 0.0 | 45.0 | 0.0 | 15.1 | 0.0 | 40.0 | 6.7 | 231 |
| 3 | 58.4 | 10.2 | 0.0 | 5.8 | 0.0 | 25.6 | 2.0 | 233 |
| 4 | 57.5 | 5.8 | 0.0 | 11.5 | 0.0 | 25.2 | 4.0 | 247 |
| 5 | 56.5 | 0.0 | 0.0 | 18.8 | 0.0 | 24.6 | 6.7 | 398 |

(continued)

| Ex. | PPPBP-epoxy | TGPAP | TGDDM | CSR-1 | CSR-2 | MDEA | CSR (%)* | Fracture Toughness (J/m$^2$) |
|---|---|---|---|---|---|---|---|---|
| 6 | 0.0 | 0.0 | 63.4 | 0.0 | 0.0 | 36.6 | 0.0 | 194 |
| 7 | 0.0 | 0.0 | 48.5 | 0.0 | 16.2 | 35.3 | 6.7 | 391 |
| 8 | 59.4 | 0.0 | 10.4 | 0.0 | 6.0 | 24.2 | 2.0 | 189 |
| 9 | 58.5 | 0.0 | 5.9 | 0.0 | 11.7 | 23.9 | 4.0 | 207 |
| 10 | 57.3 | 0.0 | 0.0 | 0.0 | 19.1 | 23.6 | 6.7 | 326 |
| 11 | 59.2 | 14.8 | 0.0 | 0.0 | 0.0 | 26.0 | 0.0 | 119 |
| 12 | 60.4 | 0.0 | 15.1 | 0.0 | 0.0 | 24.5 | 0.0 | 100 |
| * CSR is the weight percent of core-shell rubber particles with respect to the total weight of diepoxy and polyepoxide in the composition. | | | | | | | | |

As shown in Table 2, the fracture toughness of the cured compositions including TGPAP (Example 1) or TGDDM (Example 6) without PPPBP-epoxy and core-shell particles were 224 J/m$^2$ and 194 J/m$^2$, respectively. The inclusion of the core-shell particles in the TGPAP (Example 2) or TGDDM (Example 7) compositions increased the fracture toughness to 231 J/m$^2$ and 391 J/m$^2$, respectively. Similarly, the fracture toughness of the compositions that contained PPPBP-epoxy and TGPAP (Example 11) or TGDDM (Example 12) were 119 J/m$^2$ and 100 J/m$^2$. The inclusion of the core-shell particles in compositions including both PPPBP-epoxy and TGPAP (Examples 3-5) or both PPPBP-epoxy and TGDDM (Examples 8-10) showed increases in fracture toughness based on increasing amount of core-shell particles.

The compositions and fracture toughness for Examples 13-25 are shown in Table 3. The amount of DDS is included such that there is a 15 mol% greater number of epoxy groups relative to the number of amine hydrogens in the composition.

Table 3.

| Ex. | PPPBP-epoxy | TGPAP | TGDDM | CSR-1 | CSR-2 | DDS | CSR (%)* | Fracture Toughness (J/m$^2$) |
|---|---|---|---|---|---|---|---|---|
| 13 | 82.8 | 0.0 | 0.0 | 0.0 | 0.0 | 17.2 | 0.0 | 170 |
| 14 | 0.0 | 63.8 | 0.0 | 0.0 | 0.0 | 36.2 | 0.0 | 166 |
| 15 | 0.0 | 48.9 | 0.0 | 16.3 | 0.0 | 34.7 | 6.7 | 213 |
| 16 | 62.5 | 15.6 | 0.0 | 0.0 | 0.0 | 21.9 | 0.0 | 93 |
| 17 | 61.5 | 10.8 | 0.0 | 6.2 | 0.0 | 21.6 | 2.0 | 173 |
| 18 | 61.5 | 6.1 | 0.0 | 12.3 | 0.0 | 20.1 | 4.0 | 435 |
| 19 | 59.4 | 0.0 | 0.0 | 19.8 | 0.0 | 20.7 | 6.7 | 524 |
| 20 | 0.0 | 0.0 | 68.4 | 0.0 | 0.0 | 31.6 | 0.0 | 153 |
| 21 | 0.0 | 0.0 | 52.2 | 0.0 | 17.4 | 30.4 | 6.7 | 183 |
| 22 | 63.5 | 0.0 | 15.9 | 0.0 | 0.0 | 20.6 | 0.0 | 117 |
| 23 | 62.5 | 0.0 | 10.9 | 0.0 | 6.2 | 20.3 | 2.0 | 254 |
| 24 | 61.5 | 0.0 | 6.1 | 0.0 | 12.3 | 20.1 | 4.0 | 360 |
| 25 | 60.2 | 0.0 | 0.0 | 0.0 | 20.0 | 19.8 | 6.7 | 484 |
| * CSR is the weight percent of core-shell rubber particles with respect to the total weight of diepoxy and polyepoxide in the composition. | | | | | | | | |

As shown in Table 3, the fracture toughness of the cured compositions including TGPAP (Example 14) or TGDDM (Example 20) without PPPBP-epoxy or core-shell particles were 166 J/m$^2$ and 153 J/m$^2$, respectively. The inclusion of the core-shell particles in the TGPAP (Example 15) or TGDDM (Example 21) compositions increased the fracture toughness to 213 J/m$^2$ and 183 J/m$^2$, respectively. The fracture toughness of compositions including TGPAP and PPPBP-epoxy (Example 16) or TGDDM and PPPBP-epoxy (Example 22) without core-shell particles were 93 J/m$^2$

and 117 J/m$^2$, respectively. The fracture toughness of compositions including core-shell particles, TGPAP, and PPBP-epoxy were 173 J/m$^2$ (Example 17), 435 J/m$^2$ (Example 18), and 524 J/m$^2$ (Example 19), and increased based on increasing amounts of core-shell particles. The fracture toughness of compositions including core-shell particles, TGDDM, and PPBP-epoxy were 254 J/m$^2$ (Example 23), 360 J/m$^2$ (Example 24), and 484 J/m$^2$ (Example 25), and increased based on increasing amounts of core-shell particles. The results show a synergistic increase in fracture toughness that is obtained from the combination of PPBP-epoxy, TGPAP or TGDDM, and core-shell particles.

The compositions and fracture toughness for Comparative Examples 1-4 (C1-C4) are shown in Table 4. The amount of MDEA is included such that there is a 15 mol% greater number of epoxy groups relative to the number of amine hydrogens in the composition.

Table 4.

| Ex. | EPON 828 | TGPAP | TGDDM | CSR-1 | CSR-2 | MDEA | CSR (%)* | Fracture Toughness (J/m$^2$) |
|---|---|---|---|---|---|---|---|---|
| C 1 | 56.0 | 14.0 | 0.0 | 0.0 | 0.0 | 30.0 | 0 | 376 |
| C 2 | 53.5 | 0.0 | 0.0 | 17.8 | 0.0 | 28.6 | 6.7 | 478 |
| C 3 | 57.1 | 0.0 | 14.3 | 0.0 | 0.0 | 28.7 | 0 | 351 |
| C 4 | 54.3 | 0.0 | 0.0 | 0.0 | 18.1 | 27.6 | 6.7 | 487 |
| * CSR is the weight percent of core-shell rubber particles with respect to the total weight of diepoxy and polyepoxide in the composition. | | | | | | | | |

As shown in Table 4, cured compositions including a bisphenol-A epoxide that is not a high heat diepoxy compound have only a moderate increase in fracture toughness upon inclusion of core-shell particles.

The viscosity and $T_g$ for exemplary compositions are shown in Tables 5 and 6, respectively.

Table 5.

| Ex. | PPPBP-epoxy | TGPAP | TGDDM | CSR-1 | CSR-2 | MDEA | DDS | Viscosity at 90°C (Pa· s) |
|---|---|---|---|---|---|---|---|---|
| 3 | 58.4 | 10.2 | 0.0 | 5.8 | 0.0 | 25.6 | 0.0 | 9 |
| 5 | 56.5 | 0.0 | 0.0 | 18.8 | 0.0 | 24.6 | 0.0 | 21 |
| 8 | 59.4 | 0.0 | 10.4 | 0.0 | 6.0 | 24.2 | 0.0 | 43 |
| 9 | 58.5 | 0.0 | 5.9 | 0.0 | 11.7 | 23.9 | 0.0 | 45 |
| 17 | 61.5 | 10.8 | 0.0 | 6.2 | 0.0 | 0.0 | 21.6 | 2,923 |
| 23 | 62.5 | 0.0 | 10.9 | 0.0 | 6.2 | 0.0 | 20.3 | 1,470 |

Table 6.

| Ex. | PPPBP-epoxy | TGPAP | TGDDM | CSR-1 | CSR-2 | MDEA | DDS | CSR (%)* | Tg (°C) |
|---|---|---|---|---|---|---|---|---|---|
| 3 | 58.4 | 10.2 | 0.0 | 5.8 | 0.0 | 25.6 | 0.0 | 2.0 | 230 |
| 5 | 56.5 | 0.0 | 0.0 | 18.8 | 0.0 | 24.6 | 0.0 | 6.7 | 223 |
| 8 | 59.4 | 0.0 | 10.4 | 0.0 | 6.0 | 24.2 | 0.0 | 2.0 | 232 |
| 10 | 57.3 | 0.0 | 0.0 | 0.0 | 19.1 | 23.6 | 0.0 | 6.7 | 228 |
| 16 | 62.5 | 15.6 | 0.0 | 0.0 | 0.0 | 0.0 | 21.9 | 0.0 | 273 |
| 23 | 62.5 | 0.0 | 10.9 | 0.0 | 6.2 | 0.0 | 20.3 | 2.0 | 271 |
| 24 | 61.5 | 0.0 | 6.1 | 0.0 | 12.3 | 0.0 | 20.1 | 4.0 | 269 |
| 25 | 60.2 | 0.0 | 0.0 | 0.0 | 20.0 | 0.0 | 19.8 | 6.7 | 271 |

As can be seen from the data in Table 5, the viscosity of the curable compositions containing the core-shell particles are greater when the hardener is DDS. In contrast, the curable compositions including MDEA as a hardener have viscosity that is preferable for polymer processing. Table 6 shows the curable compositions including the core-shell particles had $T_g$ greater than 220°C.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5-20 wt%", is inclusive of the endpoints and all intermediate values of the ranges of "5 wt% to 25 wt%," etc.). "Combinations" is inclusive of blends, mixtures, alloys, reaction products, and the like. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "aspects", "an aspect", and so forth, means that a particular element described in connection with the aspect is included in at least one aspect described herein, and may or may not be present in other aspects. In addition, it is to be understood that the described elements can be combined in any suitable manner in the various embodiments. The term "combination thereof' is open ended and includes a combination of the listed items and may include other unlisted items.

Unless defined otherwise, technical and scientific terms used herein have the same meaning as is commonly understood by one of skill in the art to which this application belongs.

The term "alkyl" means a branched or straight chain, unsaturated aliphatic hydrocarbon group. "Alkenyl" means a straight or branched chain, monovalent hydrocarbon group having at least one carbon-carbon double bond. "Alkoxy" means an alkyl group that is linked via an oxygen. "Alkylene" means a straight or branched chain, saturated, divalent aliphatic hydrocarbon group. "Cycloalkylene" means a divalent cyclic alkylene group. "Cycloalkenyl" means a monovalent group having one or more rings and one or more carbon-carbon double bonds in the ring, wherein all ring members are carbon. "Aryl" means an aromatic hydrocarbon group containing the specified number of carbon atoms. "Arylene" means a divalent aryl group. "Alkylarylene" means an arylene group substituted with an alkyl group. "Arylalkylene" means an alkylene group substituted with an aryl group. The prefix "halo" means a group or compound including one more of a fluoro, chloro, bromo, or iodo substituent. The prefix "hetero" means that the compound or group includes at least one atom or ring member that is a heteroatom (e.g., 1, 2, or 3 heteroatom(s)), wherein the heteroatom(s) is each independently N, O, S, Si, or P.

Unless substituents are otherwise specifically indicated, each of the foregoing groups can be unsubstituted or substituted. "Substituted" means that the compound, group, or atom is substituted with at least one (e.g., 1, 2, 3, or 4) substituents instead of hydrogen, where each substituent is independently nitro ($-NO_2$), cyano (-CN), hydroxy (-OH), halogen, thiol (-SH), thiocyano (-SCN), $C_{1-6}$ alkyl, $C_{2-6}$ alkenyl, $C_{2-6}$ alkynyl, $C_{1-6}$ haloalkyl, $C_{1-9}$ alkoxy, $C_{1-6}$ haloalkoxy, $C_{3-12}$ cycloalkyl, $C_{5-18}$ cycloalkenyl, $C_{6-12}$ aryl, $C_{7-13}$ arylalkylene (e.g., benzyl), $C_{7-12}$ alkylarylene (e.g, toluyl), $C_{4-12}$ heterocycloalkyl, $C_{3-12}$ heteroaryl, $C_{1-6}$ alkyl sulfonyl ($-S(=O)_2-$ alkyl), $C_{6-12}$ arylsulfonyl ($-S(=O)_2$-aryl), or tosyl ($CH_3C_6H_4SO_2-$), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the compound or group, including those of any substituents.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

**1.** A curable high heat epoxy composition, comprising:

40 to 95 weight percent, preferably 50 to 90 weight percent, more preferably 55 to 80 weight percent of at least one high heat diepoxy compound of formulas (I) to (X);

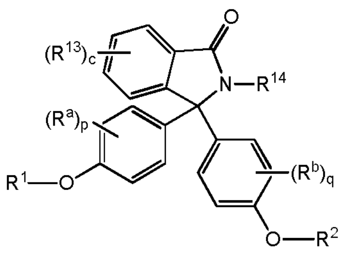 (I); 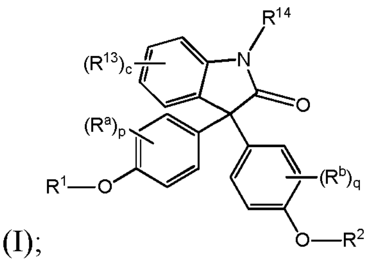 (II);

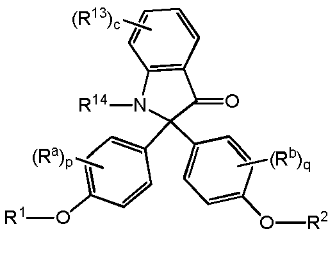 (III); 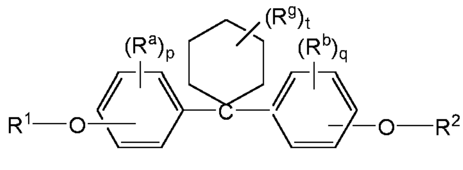 (IV);

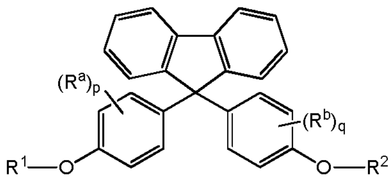 (V) 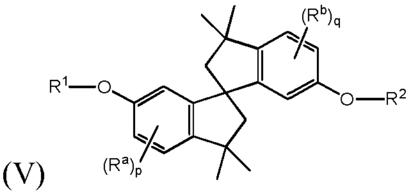 (VI);

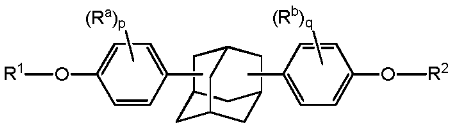 (VII); 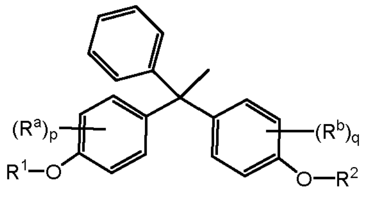 (VIII);

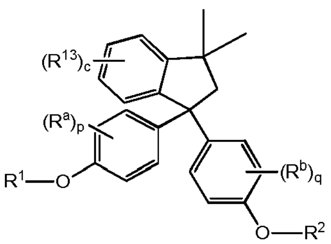 (IX); 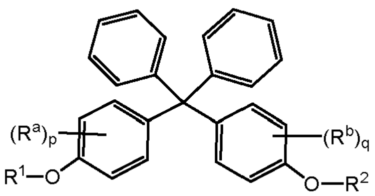 (X);

1 to 40 weight percent, preferably 5 to 30 weight percent, more preferably 8 to 20 weight percent of an auxiliary polyepoxide;
0.01 to 12 weight percent, preferably 0.1 to 10 weight percent, more preferably 1 to 8 weight percent of a core-shell particle comprising an elastomer core and a rigid shell; and
a hardener,
wherein, in formulas (I) to (X),

$R^1$ and $R^2$ are each independently an epoxide-containing functional group;
$R^a$ and $R^b$ are each independently halogen, $C_{1-12}$ alkyl, $C_{2-12}$ alkenyl, $C_{3-8}$ cycloalkyl, or $C_{1-12}$ alkoxy;
p and q are each independently 0 to 4;
$R^{13}$ is independently a halogen or a $C_{1-6}$ alkyl group;
c is independently 0 to 4;
$R^{14}$ is independently a $C_{1-6}$ alkyl, phenyl, or phenyl substituted with up to five halogens or $C_{1-6}$ alkyl groups;

$R^g$ is independently $C_1$-$C_{12}$ alkyl or halogen, or two $R^g$ groups together with the carbon atoms to which they are attached form a four-, five, or six-membered cycloalkyl group; and
t is 0 to 10.

**2.** The composition of claim 1, wherein

a cured product derived from the curable high heat epoxy composition has a fracture toughness of greater than 170 J/$m^2$, preferably 200 to 800 J/$m^2$, more preferably 300 to 800 J/$m^2$, when measured according to ASTM D5045; and
the cured product derived from the curable high heat epoxy composition has a glass transition temperature of 200°C to 270°C, preferably 220°C to 270°C, more preferably 240°C to 270°C, when measured according to ASTM D3418.

**3.** The composition of any one of the preceding claims, wherein $R^1$ and $R^2$ are each independently of formula (XA)

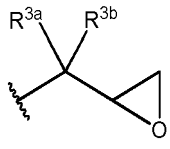
(XA)

wherein $R^{3a}$ and $R^{3b}$ are each independently hydrogen or $C_{1-12}$ alkyl.

**4.** The composition of any one of the preceding claims, wherein the high heat diepoxy compound is of formula (1-a)

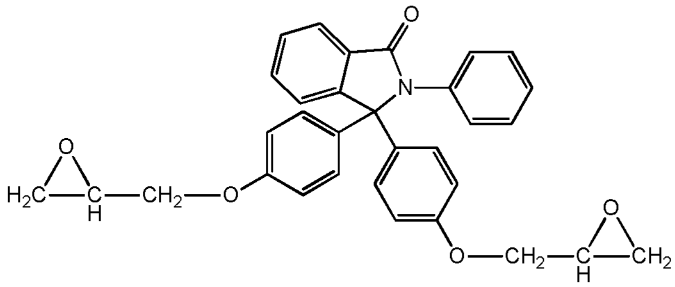
(1-a).

**5.** The composition of any one of the preceding claims,

wherein the auxiliary polyepoxide comprises a compound of formula (10):

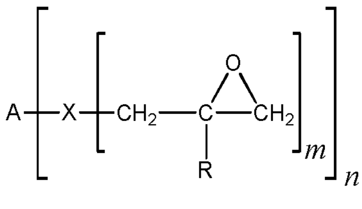
(10)

wherein A is an inorganic group or a $C_{1-60}$ hydrocarbyl group of valence n, X is oxygen or nitrogen, m is 1 or 2 and consistent with the valence of X, R is hydrogen or methyl, n is 1 to 100, preferably 1 to 8, more preferably 2 to 4, and wherein the sum of m and n is greater than 2;
preferably wherein A is a $C_{6-18}$ hydrocarbyl group and n is 2 or 3 or 4;

more preferably wherein the auxiliary polyepoxide comprises *N*,*N*-diglycidylaniline, 3,4-epoxycyclohexylmethyl-3,4-epoxycyclohexane carboxylate, 4,4'-(1,2-epoxyethyl)biphenyl, 4,4'-di(1,2-epoxyethyl)diphenyl ether, bis(2,3-epoxycyclopentyl)ether, triglycidyl isocyanurate, triglycidyl-p-aminophenol, triglycidyl-p-aminodiphenyl ether, tetraglycidyldiaminodiphenylmethane, tetraglycidyldiaminodiphenyl ether, tetrakis(4-glycidyloxyphenyl)ethane, 4,4'-methylenebis(*N*,*N*-diglycidylaniline), *N*,*N*,*N'*,*N'*-tetraglycidyl-diaminophenyl sulfone, or a combination thereof.

**6.** The composition of any one of the preceding claims, wherein

the elastomer core comprises a silicone, a polyolefin elastomer, a conjugated diene, a conjugated diene-monovinylaromatic copolymer, a ($C_{4-8}$ alkyl) (meth)acrylate rubber, or a combination thereof; and
the rigid shell comprises branched or straight chain ($C_{1-8}$ alkyl) (meth)acrylate and optionally a copolymerizable polyfunctional monomer.

**7.** The composition of any one of the preceding claims, wherein the elastomer core is derived from a conjugated diene or a conjugated diene-monovinylaromatic copolymer, preferably butadiene or styrene-butadiene copolymer.

**8.** The composition of any one of the preceding claims,

wherein the hardener comprises an amidine, an amine-terminated polyamide, an amidoamine, an anhydride, an aromatic diamine compound, a carboxylic acid-functional polyester, a cyanate ester, a dicyandiamide, an imidazoline, a ketimine, a latent cationic cure catalyst, a Mannich base, a metal salt, a phenol-formaldehyde resin, a polyamide, a polyamine, a polyetheramine, a polyisocyanate, a polymercaptan, a polysulfide, a substituted urea, or a combination thereof,
preferably wherein the hardener comprises an amidoamine, an anhydride, an aromatic diamine compound, a carboxylic acid functional polyester, a cyanate ester, a dicyandiamide, a Mannich base, a phenol-formaldehyde resin, a polyamide, a polyamine, a polyisocyanate, a polysulfide, a polymercaptan, or a combination thereof,
more preferably wherein hardener comprises 4,4'-diamino diphenyl sulfone, 3,3'-diamino diphenyl sulfone, 4,4'-methylenedianiline, diethyltoluenediamine, 4,4'-methylenebis(2,6-diethyl aniline), m-phenylenediamine, p-phenylenediamine, 2,4-bis(p-aminobenzyl)aniline, 3,5-diethyltoluene-2,4-diamine, 3,5-diethyltoluene-2,6-diamine, m-xylylenediamine, p-xylylenediamine, or a combination thereof.

**9.** The composition of any one of the preceding claims, wherein

a cured product derived from the curable high heat epoxy composition has a fracture toughness of greater than 250 J/$m^2$, preferably 300 to 800 J/$m^2$, more preferably greater than 400 to 800 J/$m^2$, when measured according to ASTM D5045; and
the cured product derived from the curable high heat epoxy composition has a glass transition temperature of 200°C to 275°C, preferably 220°C to 275°C, more preferably 240°C to 275°C, when measured according to ASTM D3418,
preferably wherein the hardener comprises 4,4'-diamino diphenyl sulfone, 3,3'-diamino diphenyl sulfone, 4,4'-bis(3,4-dicarboxyphenoxy)diphenyl sulfone dianhydride, 4,4'-bis(2,3-dicarboxyphenoxy)diphenyl sulfone dianhydride, 4-(2,3-dicarboxyphenoxy)-4'-(3,4-dicarboxyphenoxy)diphenyl sulfone dianhydride, or a combination thereof.

**10.** The composition of any one of the preceding claims, comprising

50 to 90 parts by weight of the high heat diepoxy compound, wherein the high heat diepoxy compound is of formula (1-a), (2-a), (4-b):

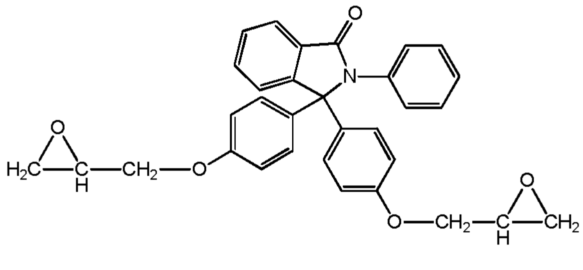 (1-a),

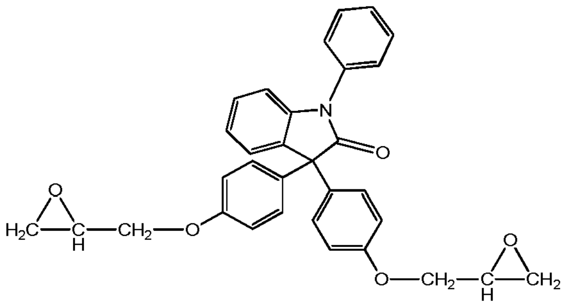

(2-a),

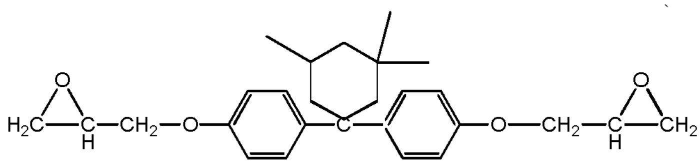

(4-b),

or a combination thereof;

5 to 30 weight percent of the auxiliary polyepoxide, wherein the auxiliary polyepoxide comprises *N*,*N*-diglycidylaniline, 3,4-epoxycyclohexylmethyl-3,4-epoxycyclohexane carboxylate, 4,4'-(1,2-epoxyethyl)biphenyl, 4,4'-di(1,2-epoxyethyl)diphenyl ether, bis(2,3-epoxycyclopentyl)ether, triglycidyl isocyanurate, triglycidyl-p-aminophenol, triglycidyl-p-aminodiphenyl ether, tetraglycidyldiaminodiphenylmethane, tetraglycidyldiaminodiphenyl ether, tetrakis(4-glycidyloxyphenyl)ethane, 4,4'-methylenebis(*N*,*N*-diglycidylaniline), *N,N,N',N'*-tetraglycidyldiaminophenyl sulfone, or a combination thereof; and

0.1 to 10 weight percent of the core-shell particle, wherein the core-shell particle comprises a conjugated diene or a conjugated diene-monovinylaromatic copolymer, or a combination thereof.

**11.** A cured epoxy composition comprising the product obtained by curing the curable high heat epoxy composition of any one of the preceding claims.

**12.** The cured epoxy composition of claim 11, comprising the product obtained by curing the curable high heat epoxy composition comprising:

55 to 80 weight percent of the high heat diepoxy compound of formula (1-a)

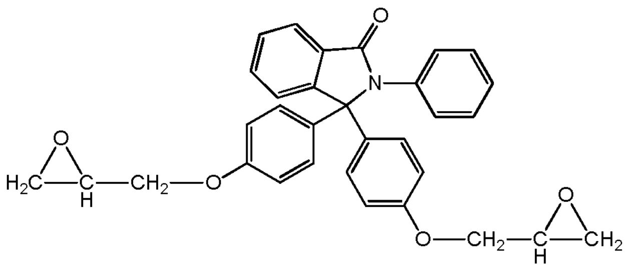

(1-a);

8 to 20 weight percent of tetraglycidyldiaminodiphenylmethane, 4,4'-methylenebis-(2,6-diethylaniline), or a combination thereof;

1 to 8 weight percent of a core-shell particle, wherein the core comprises butadiene or styrene-butadiene copolymer; and

4,4'-diaminodiphenyl sulfone or 4,4'-methylenebis-(2,6-diethylaniline).

**13.** A method for the manufacture of a cured epoxy composition, the method comprising subjecting the curable high heat epoxy composition of any one of the preceding claims to an amount of heat for a time effective to cure the composition.

**14.** An article comprising the cured composition of any one of claims 11 to 12, preferably wherein the article is a coating, encapsulant, adhesive, or matrix polymer of a composite.

## Patentansprüche

1. Härtbare hitzebeständige Epoxidzusammensetzung, umfassend:

40 bis 95 Gewichtsprozent, bevorzugt 50 bis 90 Gewichtsprozent, bevorzugter 55 bis 80 Gewichtsprozent von wenigstens einer hitzebeständigen Diepoxid-Verbindung der Formeln (I) bis (X);

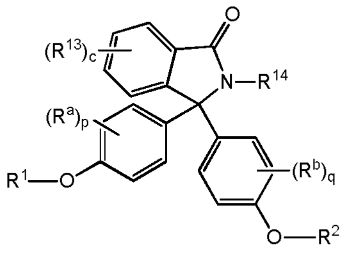 (I); 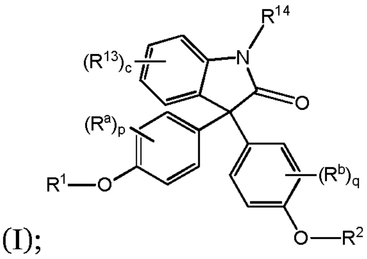 (II); 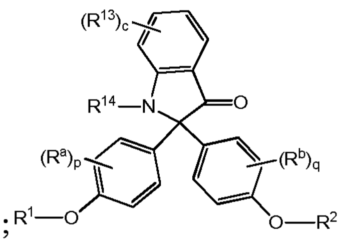 (III);

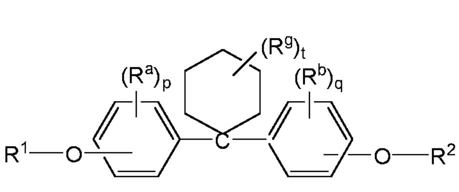 (IV); 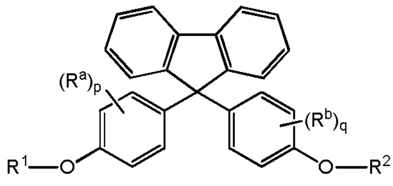 (V)

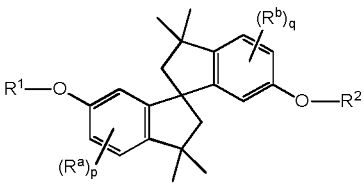 (VI); 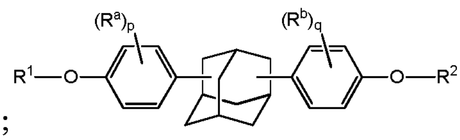 (VII);

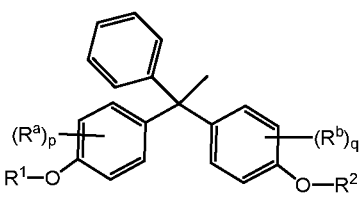 (VIII); 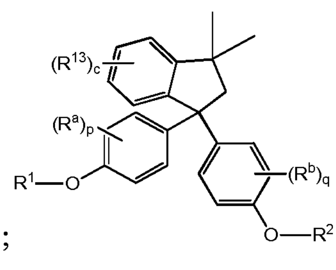 (IX);

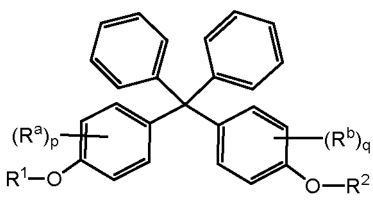 (X);

1 bis 40 Gewichtsprozent, bevorzugt 5 bis 30 Gewichtsprozent, bevorzugter 8 bis 20 Gewichtsprozent eines Hilfs-Polyepoxids;
0,01 bis 12 Gewichtsprozent, bevorzugt 0,1 bis 10 Gewichtsprozent, bevorzugter 1 bis 8 Gewichtsprozent eines Kern-Schale-Partikels, umfassend einen Elastomer-Kern und eine feste Schale; und
ein Härtungsmittel,
wobei in den Formeln (I) bis (X),

$R^1$ und $R^2$ jeweils unabhängig eine epoxid-enthaltende funktionelle Gruppe sind;

$R^a$ und $R^b$ jeweils unabhängig Halogen, $C_{1-12}$-Alkyl, $C_{2-12}$-Alkenyl, $C_{3-8}$-Cycloalkyl, oder $C_{1-12}$-Alkoxy sind;
p und q jeweils unabhängig 0 bis 4 sind;
$R^{13}$ unabhängig ein Halogen oder eine $C_{1-6}$-Alkylgruppe ist;
c unabhängig 0 bis 4 ist;
$R^{14}$ unabhängig ein $C_{1-6}$-Alkyl, Phenyl, oder Phenyl ist, welches mit bis zu fünf Halogenen oder $C_{1-6}$-Alkylgruppen substituiert ist;
$R^g$ unabhängig $C_{1-}C_{12}$-Alkyl oder Halogen ist, oder zwei $R^g$-Gruppen bilden zusammen mit den Kohlenstoffatomen, an die sie angehängt sind, eine vier-, fünf- oder sechsgliedrige Cycloalkylgruppe; und

to bis 10 ist.

**2.** Zusammensetzung nach Anspruch 1, wobei

ein ausgehärtetes Produkt, abgeleitet von der härtbaren hitzebeständigen Epoxidzusammensetzung eine Bruchzähigkeit von mehr als 170 J/m$^2$, bevorzugt 200 bis 800 J/m$^2$, bevorzugter 300 bis 800 J/m$^2$, hat, bei Messung gemäß ASTM D5045; und
das ausgehärtete Produkt, abgeleitet von der härtbaren hitzebeständigen Epoxidzusammensetzung, eine Glasübergangstemperatur von 200°C bis 270°C, bevorzugt 220°C bis 270°C, bevorzugter 240°C bis 270°C, hat, bei Messung gemäß ASTM D3418.

**3.** Zusammensetzung nach einem der vorangehenden Ansprüche, wobei $R^1$ und $R^2$ jeweils unabhängig die Formel (XA)

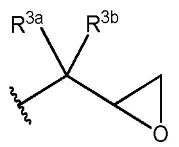
(XA)

haben, wobei $R^{3a}$ und $R^{3b}$ jeweils unabhängig Wasserstoff oder $C_{1-12}$-Alkyl sind.

**4.** Zusammensetzung nach einem der vorangehenden Ansprüche, wobei die hitzebeständige Diepoxid-Verbindung die Formel (1-a) hat

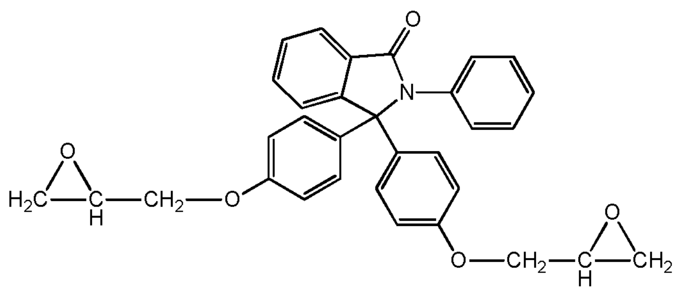
(1-a).

**5.** Zusammensetzung nach einem der vorangehenden Ansprüche,

wobei das Hilfs-Polyepoxid eine Verbindung der Formel (10) umfasst:

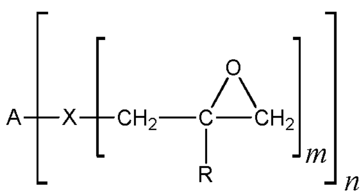
(10)

wobei A eine anorganische Gruppe oder eine $C_{1-60}$-Kohlenwasserstoffgruppe mit der Valenz n ist, X Sauerstoff oder Stickstoff ist, m 1 oder 2 ist und mit der Valenz von X konsistent ist, R Wasserstoff oder Methyl ist, n 1 bis

100 beträgt, bevorzugt 1 bis 8, bevorzugter 2 bis 4, und wobei die Summe von m und n größer als 2 ist;
wobei bevorzugt A eine $C_{6-18}$-Kohlenwasserstoffgruppe ist und n 2 oder 3 oder 4 ist;
wobei bevorzugter das Hilfs-Polyepoxid *N*,*N* Diglycidylanilin, 3,4-Epoxycyclohexylmethyl-3,4-Epoxycyclohexancarboxylat, 4,4'-(1,2-Epoxyethyl)biphenyl, 4,4'-Di(1,2-epoxyethyl)diphenylether, Bis(2,3-epoxycyclopentyl)ether, Triglycidylisocyanurat, Triglycidyl-p-aminophenol, Triglycidyl-p-aminodiphenylether, Tetraglycidyldiaminodiphenylmethan, Tetraglycidyldiaminodiphenylether, Tetrakis(4-glycidyloxyphenyl)ethan, 4,4'-Methylenbis(*N*,*N*-diglycidylanilin), *N*,*N*,*N*',*N*'-Tetraglycidyl-diaminophenylsulfon oder eine Kombination davon umfaßt.

**6.** Zusammensetzung nach einem der vorangegangenen Ansprüche, wobei

der Elastomer-Kern ein Silikon, ein Polyolefin-Elastomer, ein konjugiertes Dien, ein konjugiertes Dien-monovinylaromatisches Copolymer, einen ($C_{4-8}$-Alkyl)(meth)acrylat-Gummi oder eine Kombination davon umfasst; und
die feste Schale verzweigt- oder geradkettiges ($C_{1-8}$-Alkyl)(meth)acrylat und wahlweise ein copolymerisierbares polyfunktionelles Monomer umfasst.

**7.** Zusammensetzung nach einem der vorangehenden Ansprüche, wobei der Elastomer-Kern von einem konjugierten Dien oder einem konjugierten Dien-monovinylaromatischem Copolymer abgeleitet ist, bevorzugt Butadien oder Styrol-Butadien-Copolymer.

**8.** Zusammensetzung nach einem der vorangehenden Ansprüche,

wobei das Härtungsmittel ein Amidin, ein Polyamid mit Amin-Endgruppe, ein Amidoamin, ein Anhydrid, eine aromatische Diamin-Verbindung, ein Carbonsäure-funktioneller Polyester, ein Cyanatester, ein Dicyandiamid, ein Imidazolin, ein Ketimin, einen latenten kationischen Härtungskatalysator, eine Mannich-Base, ein Metallsalz, ein Phenol-Formaldehyd-Harz, ein Polyamid, ein Polyamin, ein Polyetheramin, ein Polyisocyanat, ein Polymercaptan, ein Polysulfid, einen substituierten Harnstoff oder eine Kombination davon umfaßt,
wobei bevorzugt das Härtungsmittel ein Amidoamin, ein Anhydrid, eine aromatische Diamin-Verbindung, einen Carbonsäure-funktionellen Polyester, einen Cyanatester, ein Dicyandiamid, eine Mannich-Base, ein Phenol-Formaldehyd-Harz, ein Polyamid, ein Polyamin, ein Polyisocyanat, ein Polysulfid, ein Polymercaptan oder eine Kombination davon umfasst,
wobei bevorzugter das Härtungsmittel 4,4'-Diamino-diphenylsulfon, 3,3'-Diamino-diphenylsulfon, 4,4'-Methylendianilin, Diethyltoluoldiamin, 4,4'-Methylenbis(2,6-diethylanilin), m-Phenylendiamin, p-Phenylendiamin, 2,4-Bis(p-aminobenzyl)anilin, 3,5-Diethyltoluol-2,4-diamin, 3,5-Diethyltoluol-2,6-diamin, m-Xylylendiamin, p-Xylylendiamin oder eine Kombination davon umfasst.

**9.** Zusammensetzung nach einem der vorangehenden Ansprüche, wobei

ein ausgehärtetes Produkt, das von der härtbaren hitzebeständigen Epoxidzusammensetzung abgeleitet ist, eine Bruchzähigkeit von größer als 250 $J/m^2$, bevorzugt 300 bis 800 $J/m^2$, bevorzugter mehr als 400 bis 800 $J/m^2$ hat, bei Messung gemäß ASTM D5045 aufweist; und das ausgehärtete Produkt, abgeleitet von der härtbaren hitzebeständigen Epoxidzusammensetzung eine Glasübergangstemperatur von 200°C bis 275°C, bevorzugt 220°C bis 275°C, bevorzugter 240°C bis 275°C hat, bei Messung gemäß ASTM D3418,
wobei bevorzugt das Härtungsmittel 4,4'-Diaminodiphenylsulfon, 3,3'-Diaminodiphenylsulfon, 4,4'-Bis(3,4-dicarboxyphenoxy)diphenylsulfondianhydrid, 4,4'-Bis(2,3-dicarboxy-phenoxy) diphenylsulfondianhydrid, 4-(2,3-Dicarboxyphenoxy)-4'-(3,4-dicarboxyphenoxy)diphenylsulfondianhydrid oder eine Kombination davon umfasst.

**10.** Zusammensetzung nach einem der vorangehenden Ansprüche, umfassend

50 bis 90 Gewichtsprozent der hitzebeständigen Diepoxid-Verbindung, wobei die hitzebeständige Diepoxid-Verbindung eine der Formeln (1-a), (2-a), (4-b):

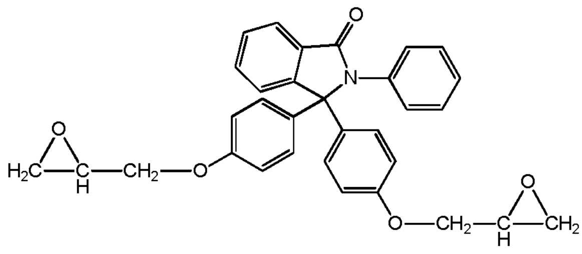

(1-a),

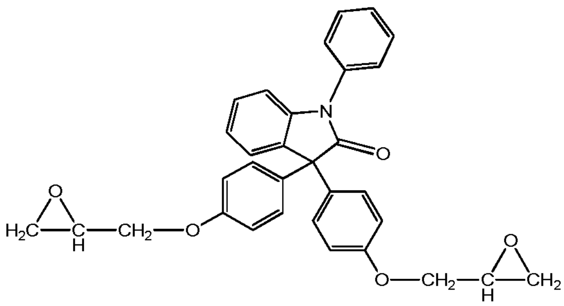

(2-a),

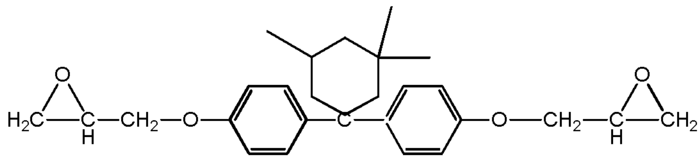

(4-b),

oder eine Kombination davon aufweist;

5 bis 30 Gewichtsprozent des Hilfs-Polyepoxids, wobei das Hilfs-Polyepoxid *N,N*-Diglycidylanilin, 3,4-Epoxycyclohexylmethyl-3,4-epoxycyclohexancarboxylat, 4,4'-(1,2-Epoxyethyl)biphenyl, 4,4'- Di(1,2-Epoxyethyl)diphenylether, Bis(2,3-epoxycyclopentyl)ether, Triglycidylisocyanurat, Triglycidyl-p-aminophenol, Triglycidyl-p-aminodiphenylether, Tetraglycidyldiaminodiphenylmethan, Tetraglycidyldiaminodiphenylether, Tetrakis(4-glycidyloxyphenyl)ethan, 4,4'-Methylenbis(*N*,*N*-diglycidylanilin), *N*,*N*,*N'*,*N'*-Tetraglycidyl-diaminophenylsulfon, oder eine Kombination davon umfasst; und

0,1 bis 10 Gewichtsprozent des Kern-Schalen-Partikels, wobei das Kern-Schalen-Partikel ein konjugiertes Dien oder ein konjugiertes Dien-monovinylaromatisches Copolymer oder eine Kombination davon umfasst.

**11.** Ausgehärtete Epoxidzusammensetzung, umfassend das Produkt, welches durch Aushärten der härtbaren hitzebeständigen Epoxidzusammensetzung nach einem der vorhergehenden Ansprüche erhalten wird.

**12.** Ausgehärtete Epoxidzusammensetzung nach Anspruch 11, umfassend das Produkt, erhalten durch Aushärten der härtbaren hitzebeständigen Epoxidzusammensetzung, umfassend: 55 bis 80 Gewichtsprozent der hitzebeständigen Diepoxid-Verbindung der Formel (1-a)

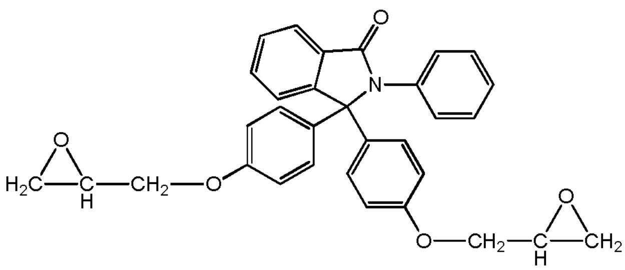

(1-a);

8 bis 20 Gewichtsprozent von Tetraglycidyldiaminodiphenylmethan, 4,4'-Methylenbis-(2,6-diethylanilin) oder eine Kombination davon;

1 bis 8 Gewichtsprozent eines Kern-Schalen-Partikels, wobei der Kern Butadien oder Styrol-Butadien-Copolymer umfasst; und
4,4'-Diaminodiphenylsulfon oder 4,4'-Methylenbis-(2,6-diethylanilin).

**13.** Verfahren zur Herstellung einer ausgehärteten Epoxidzusammensetzung, wobei das Verfahren das Aussetzen der härtbaren hitzebeständigen Epoxidzusammensetzung nach einem der vorangehenden Ansprüche gegenüber einer Wärmemenge für eine zum Aushärten der Zusammensetzung ausreichenden Zeit umfasst.

**14.** Artikel, umfassend die ausgehärtete Zusammensetzung nach einem der Ansprüche 11 bis 12, wobei bevorzugt der Artikel eine Beschichtung, ein Einbettungsmittel, ein Klebstoff oder ein Matrixpolymer eines Verbundstoffs ist.

## Revendications

**1.** Composition d'époxy haute température durcissable, comprenant :

40 à 95 % en poids, de préférence 50 à 90 % en poids, mieux encore 55 à 80 % en poids d'au moins un composé diépoxy haute température de formules (I) à (X) ;

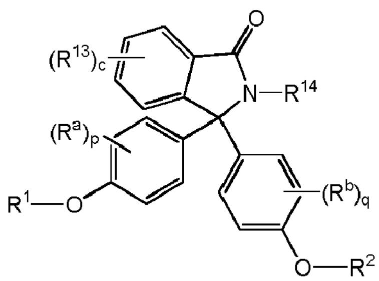
(I);

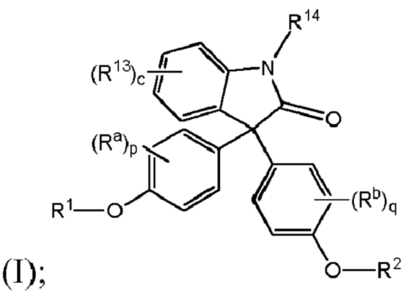
(II);

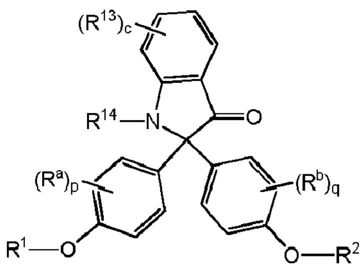
(III);

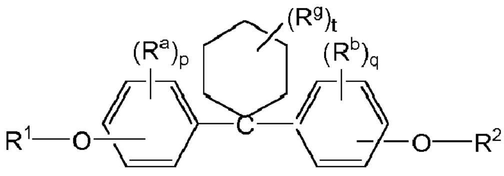
(IV);

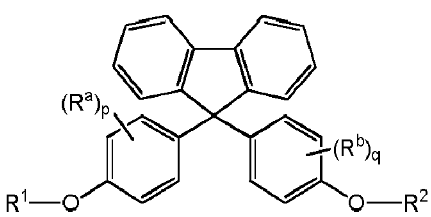
(V)

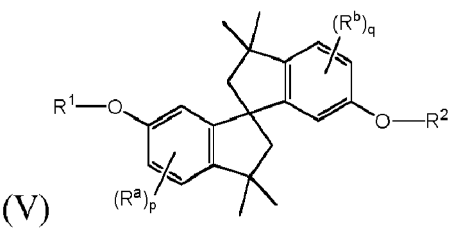
(VI);

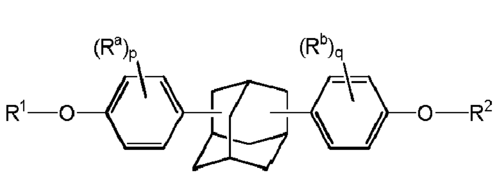
(VII);

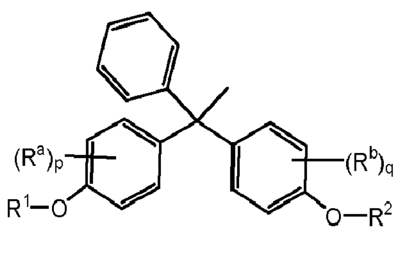
(VIII);

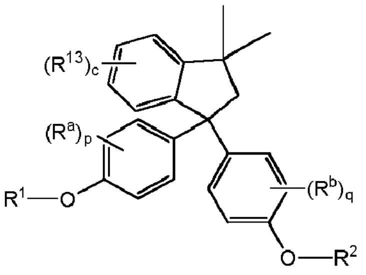 (IX); 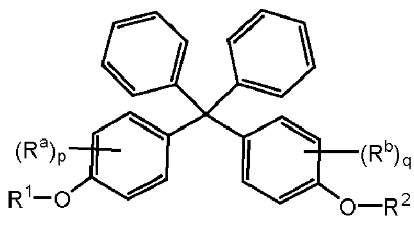 (X);

1 à 40 % en poids, de préférence 5 à 30 % en poids, mieux encore 8 à 20 % en poids d'un polyépoxyde auxiliaire ;
0,01 à 12 % en poids, de préférence 0,1 à 10 % en poids, mieux encore 1 à 8 % en poids d'une particule cœur-écorce comprenant un cœur élastomère et une écorce rigide ; et
un durcisseur,
dans laquelle, dans les formules (I) à (X),
chacun de $R^1$ et $R^2$ est indépendamment un groupe fonctionnel contenant un époxyde;
chacun de $R^a$ et $R^b$ est indépendamment un halogène, alkyle en $C_1$ à $C_{12}$, alcényle en $C_2$ à $C_{12}$, cycloalkyle en $C_3$ à $C_8$, ou alcoxy en $C_1$ à $C_{12}$ ;
chacun de p et q vaut indépendamment de 0 à 4 ;
$R^{13}$ est indépendamment un halogène ou un groupe alkyle en $C_1$ à $C_6$ ;
c vaut indépendamment de 0 à 4 ;
$R^{14}$ est indépendamment un alkyle en $C_1$ à $C_6$, phényle, ou phényle substitué par jusqu'à cinq halogènes ou groupes alkyle en $C_1$ à $C_6$ ;
$R^g$ est indépendamment un alkyle en $C_1$ à $C_{12}$ ou un halogène, ou bien deux groupes $R^g$, conjointement avec les atomes de carbone auxquels ils sont rattachés, forment un groupe cycloalkyle à quatre, cinq ou six chaînons ; et
t vaut de 0 à 10.

**2.** Composition selon la revendication 1, dans laquelle

un produit durci dérivé de la composition d'époxy haute température durcissable a une ténacité à la rupture supérieure à 170 $J/m^2$, de préférence de 200 à 800 $J/m^2$, mieux encore de 300 à 800 $J/m^2$, quand elle est mesurée conformément à la norme ASTM D5045 ; et
le produit durci dérivé de la composition d'époxy haute température durcissable a une température de transition vitreuse de 200 °C à 270 °C, de préférence de 220 °C à 270 °C, mieux encore de 240 °C à 270 °C, quand elle est mesurée conformément à ASTM D3418.

**3.** Composition selon l'une quelconque des revendications précédentes, dans laquelle chacun de $R^1$ et $R^2$ est indépendamment de formule (XA)

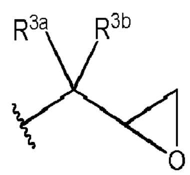 (XA)

dans laquelle chacun de $R^{3a}$ et $R^{3b}$ est indépendamment l'hydrogène ou un alkyle en $C_1$ à $C_{12}$.

**4.** Composition selon l'une quelconque des revendications précédentes, dans laquelle le composé diépoxy haute température est de formule (1-a)

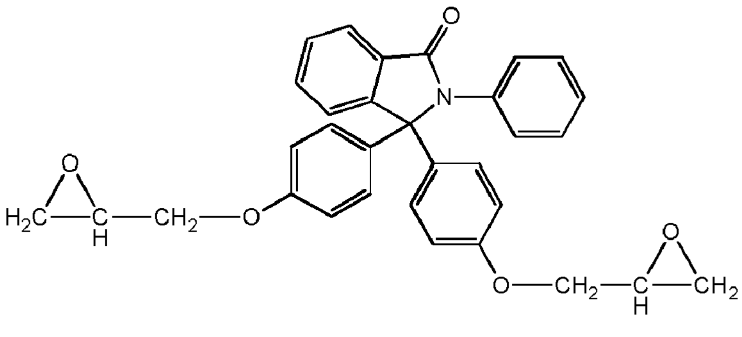

(1-a).

5. Composition selon l'une quelconque des revendications précédentes, dans laquelle le polyépoxyde auxiliaire comprend un composé de formule (10) :

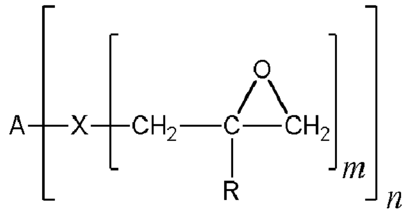

(10)

dans laquelle A est un groupe inorganique ou un groupe hydrocarbyle en $C_1$ à $C_{60}$ de valence n, X est l'oxygène ou l'azote, m vaut 1 ou 2 et est en accord avec la valence de X, R est l'hydrogène ou méthyle, n vaut de 1 à 100, de préférence de 1 à 8, mieux encore de 2 à 4, et la somme de m et n étant supérieure à 2 ;
de préférence dans laquelle A est un groupe hydrocarbyle en $C_6$ à $C_{18}$ et n vaut 2, 3 ou 4 ;
mieux encore dans laquelle le polyépoxyde auxiliaire comprend de la *N,N*-diglycidylaniline, du 3,4-époxycyclohexylméthyl-3,4-époxycyclohexane carboxylate, du 4,4'-(1,2-époxyéthyl)biphényle, du 4,4'-di(1,2-époxyéthyl)diphényléther, du bis(2,3-époxycyclopentyl)éther, de l'isocyanurate de triglycidyle, du triglycidyl-p-aminophénol, du triglycidyl-p-aminodiphényléther, du tétraglycidyldiaminodiphénylméthane, du tétraglycidyldiaminodiphényléther, du tétrakis(4-glycidyloxyphényl)éthane, de la 4,4'-méthylènebis(*N*,*N*-diglycidylaniline), de la *N*,*N*,*N*',*N*'-tétraglycidyl-diaminophénylsulfone, ou une de leurs combinaisons.

6. Composition selon l'une quelconque des revendications précédentes, dans laquelle

le cœur élastomère comprend une silicone, un élastomère de polyoléfine, un diène conjugué, un copolymère de diène conjugué-monovinylaromatique, un caoutchouc de (méth)acrylate d'alkyle en $C_4$ à $C_8$, ou une de leurs combinaisons ; et
l'écorce rigide comprend un (méth)acrylate d'alkyle en $C_1$ à $C_8$ à chaîne droite ou ramifiée et éventuellement un monomère polyfonctionnel copolymérisable.

7. Composition selon l'une quelconque des revendications précédentes, dans laquelle le cœur élastomère dérive d'un diène conjugué ou d'un copolymère de diène conjugué-monovinylaromatique, de préférence de butadiène ou de copolymère de styrène-butadiène.

8. Composition selon l'une quelconque des revendications précédentes,

dans laquelle le durcisseur comprend une amidine, un polyamide à terminaison amine, une amidoamine, un anhydride, un composé diamine aromatique, un polyester à fonctionnalité acide carboxylique, un ester cyanate, un dicyanodiamide, une imidazoline, une cétimine, un catalyseur de durcissement cationique latent, une base de Mannich, un sel métallique, une résine de phénol-formaldéhyde, un polyamide, une polyamine, une polyétheramine, un polyisocyanate, un polymercaptan, un polysulfure, une urée substituée, ou une de leurs combinaisons,
de préférence dans laquelle le durcisseur comprend une amidoamine, un anhydride, un composé diamine aromatique, un polyester à fonctionnalité acide carboxylique, un ester cyanate, un dicyanodiamide, une base de Mannich, une résine de phénol-formaldéhyde, un polyamide, une polyamine, un polyisocyanate, un polysulfure, un polymercaptan, ou une de leurs combinaisons,
mieux encore dans laquelle le durcisseur comprend de la 4,4'-diaminodiphénylsulfone, de la 3,3'-diaminodiphénylsulfone, de la 4,4'-méthylènedianiline, de la diéthyltoluènediamine, de la 4,4'-méthylénebis(2,6-diéthylaniline), de la m-phénylènediamine, de la p-phénylènediamine, de la 2,4-bis(p-aminobenzyl)aniline, de la 3,5-diéthyltoluène-2,4-diamine, de la 3,5-diéthyltoluéne-2,6-diamine, de la m-xylylènediamine, de la p-xylylènediamine, ou une de leurs combinaisons.

**9.** Composition selon l'une quelconque des revendications précédentes, dans laquelle

un produit durci dérivé de la composition d'époxy haute température durcissable a une ténacité à la rupture supérieure à 250 J/m$^2$, de préférence de 300 à 800 J/m$^2$, mieux encore supérieure à 400 à 800 J/m$^2$, quand elle est mesurée conformément à ASTM D5045 ; et
le produit durci dérivé de la composition d'époxy haute température durcissable a une température de transition vitreuse de 200 °C à 275 °C, de préférence de 220 °C à 275 °C, mieux encore de 240 °C à 275 °C, quand elle est mesurée conformément à ASTM D3418,
de préférence dans laquelle le durcisseur comprend de la 4,4'-diaminodiphénylsulfone, de la 3,3'-diaminodiphénylsulfone, du dianhydride de 4,4'-bis(3,4-dicarboxyphénoxy)diphénylsulfone, du dianhydride de 4,4'-bis(2,3-dicarboxyphénoxy)diphénylsulfone, du dianhydride de 4-(2,3-dicarboxyphénoxy)-4'-(3,4-dicarboxyphénoxy)diphénylsulfone, ou une de leurs combinaisons.

**10.** Composition selon l'une quelconque des revendications précédentes, comprenant

50 à 90 parties en poids du composé diépoxy haute température, lequel composé diépoxy haute température est de formule (1-a), (2-a), (4-b) :

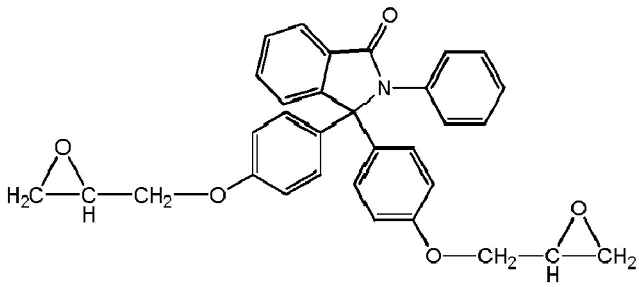
(1-a),

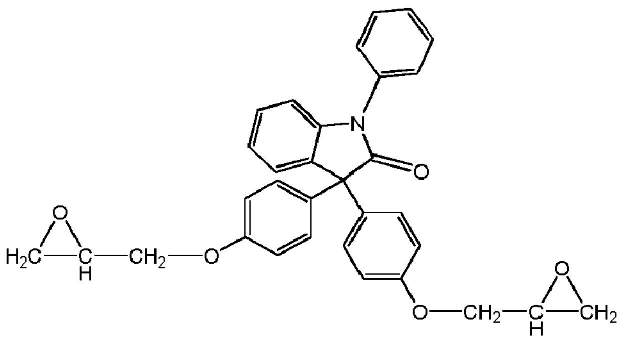
(2-a),

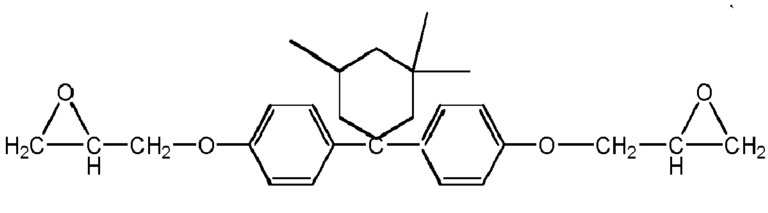
(4-b),

ou une de leurs combinaisons ;

5 à 30 % en poids du polyépoxyde auxiliaire, lequel polyépoxyde auxiliaire comprend de la *N*,*N*-diglycidylaniline, du 3,4-époxycyclohexylméthyl-3,4-époxycyclohexane carboxylate, du 4,4'-(1,2-époxyéthyl)biphényle, du 4,4'-di(1,2-époxyéthyl)diphényléther, du bis(2,3-époxycyclopentyl)éther, de l'isocyanurate de triglycidyle, du triglycidyl-p-aminophénol, du triglycidyl-p-aminodiphényléther, du tétraglycidyldiaminodiphénylméthane, du tétraglycidyldiaminodiphényléther, du tétrakis(4-glycidyloxyphényl)éthane, de la 4,4'-méthylènebis(*N*,*N*-diglycidylaniline), de la *N*,*N*,*N'*,*N'*-tétraglycidyl-diaminophénylsulfone, ou une de leurs combinaisons ; et
0,1 à 10 % en poids de la particule cœur-écorce, laquelle particule cœur-écorce comprend un diène conjugué ou un copolymère de diène conjugué-monovinylaromatique, ou une de leurs combinaisons.

**11.** Composition d'époxy durcie comprenant le produit obtenu par durcissement de la composition d'époxy haute température durcissable selon l'une quelconque des revendications précédentes.

**12.** Composition d'époxy durcie selon la revendication 11, comprenant le produit obtenu par durcissement de la composition d'époxy haute température durcissable comprenant :

55 à 80 % en poids du composé diépoxy haute température de formule (1-a)

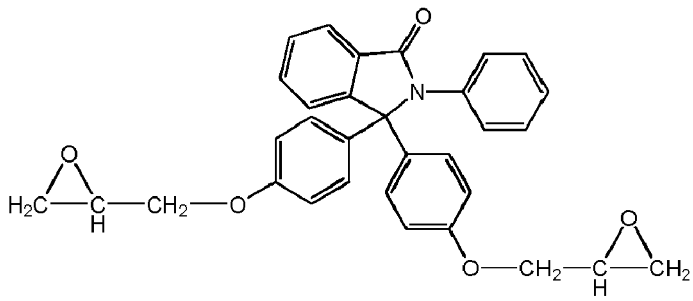

(1-a);

8 à 20 % en poids de tétraglycidyldiaminodiphénylméthane, de 4,4'-méthylénebis-(2,6-diéthylaniline), ou d'une de leurs combinaisons ;
1 à 8 % en poids d'une particule cœur-écorce, dans laquelle le cœur comprend du butadiène ou un copolymère de styrène-butadiène ; et
de la 4,4'-diaminodiphénylsulfone ou de la 4,4'-méthylènebis-(2,6-diéthylaniline).

**13.** Méthode de fabrication d'une composition d'époxy durcie, la méthode comprenant la soumission de la composition d'époxy haute température durcissable selon l'une quelconque des revendications précédentes à une quantité de chaleur pendant un temps efficace pour durcir la composition.

**14.** Article comprenant la composition durcie selon l'une quelconque des revendications 11 et 12, de préférence lequel article est un revêtement, un encapsulant, un adhésif, ou un polymère de matrice d'un composite.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3064520 A1
- EP 2620460 A1
- EP 0203828 A1
- WO 2016014536 A
- WO 2016014536 A1
- US 2015041338 A
- US 3334110 A, Schramm
- US 20070027233 A
- WO 2017011332 A


### Non-patent literature cited in the description


- *Angew. Makromol. Chem.,* 1975, vol. 44, 151-163
- *CHEMICAL ABSTRACTS,* 25068-38-6